(19) Europäisches Patentamt / European Patent Office / Office européen des brevets

(11) **EP 4 412 113 A1**

(12) **EUROPEAN PATENT APPLICATION**
published in accordance with Art. 153(4) EPC

(43) Date of publication:
**07.08.2024 Bulletin 2024/32**

(21) Application number: **22889209.7**

(22) Date of filing: **28.10.2022**

(51) International Patent Classification (IPC):
**H04B 17/309** (2015.01)

(52) Cooperative Patent Classification (CPC):
**H04B 17/309; H04W 72/12; H04W 72/232**

(86) International application number:
**PCT/CN2022/128389**

(87) International publication number:
**WO 2023/078184 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 CN 202111308899**

(71) Applicant: **Huawei Technologies Co., Ltd.**
**Shenzhen, Guangdong 518129 (CN)**

(72) Inventors:
• **LIU, Xianda**
  **Shenzhen, Guangdong 518129 (CN)**
• **GAO, Fei**
  **Shenzhen, Guangdong 518129 (CN)**
• **YANG, Yubo**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57) A communication method and apparatus are provided. The method includes: A terminal device detects DCI on at least one of a first PDCCH candidate and a second PDCCH candidate. If the first PDCCH candidate and the second PDCCH candidate satisfy a specific condition, and when the at least one of the first PDCCH candidate and the second PDCCH candidate is associated with another PDCCH candidate, the terminal device determines a reference PDCCH candidate based on the first PDCCH candidate, the second PDCCH candidate, and the another PDCCH candidate. In the foregoing method, scheduling information determined by the terminal device can be consistent with scheduling information determined by a network device.

FIG. 14

**Description**

**CROSS-REFERENCE TO RELATED APPLICATIONS**

This application claims priority to Chinese Patent Application No. 202111308899.X, filed with the China National Intellectual Property Administration on November 5, 2021 and entitled "COMMUNICATION METHOD AND APPARATUS", which is incorporated herein by reference in its entirety.

**TECHNICAL FIELD**

Embodiments of this application relate to the field of wireless communication, and in particular, to a communication method and apparatus.

**BACKGROUND**

In a new radio (new radio, NR) system, a polar (polar) code structure is used for downlink control information (downlink control information, DCI). During encoding of polar code, mother code with a specific length is repeated to obtain a codeword at a specific aggregation level (aggregation level, AL). For example, AL8 is obtained based on mother code with a length of 512 and repetition of some bits of the mother code, and AL16 is also obtained based on the mother code with the length of 512 and repetition of the mother code. It can be seen that a codeword corresponding to AL16 includes all information included in a codeword corresponding to AL8. Consequently, in some scenarios, for example, when a resource element (resource element RE) occupied by a PDCCH candidate corresponding to AL16 overlaps a resource element occupied by a PDCCH candidate corresponding to AL8, a terminal device cannot determine a quantity of physical resources occupied by DCI actually sent by a network device. In this case, scheduling information determined by the terminal device is inconsistent with scheduling information determined by the network device.
When a repeat transmission mechanism is used for DCI, an RE occupied by at least one of two mutually associated PDCCH candidates corresponding to the repeatedly transmitted DCI overlaps an RE occupied by another PDCCH candidate, and one of the two PDCCH candidates on which overlapping occurs includes all codewords in the other PDCCH candidate, scheduling information determined by the terminal device is still inconsistent with scheduling information determined by the network device.

**SUMMARY**

Embodiments of this application provide a communication method and apparatus, to resolve a problem that scheduling information of a network device is misread because scheduling information determined by a terminal device based on repeatedly transmitted DCI may be inconsistent with the scheduling information determined by the network device.
According to a first aspect, this application provides a communication method. The method includes:
A terminal device detects DCI on at least one of a first PDCCH candidate and a second PDCCH candidate. The first PDCCH candidate corresponds to a first aggregation level. The first PDCCH candidate includes a plurality of control channel elements CCEs. The second PDCCH candidate corresponds to a second aggregation level. The second PDCCH candidate includes a plurality of CCEs. A start index of the CCE included in the first PDCCH candidate is the same as a start index of the CCE included in the second PDCCH candidate. The first PDCCH candidate and the second PDCCH candidate are associated with a first control resource set. The first control resource set occupies one orthogonal frequency division multiplexing OFDM symbol in time domain. Mapping of the plurality of CCEs included in the first PDCCH candidate is non-interleaved mapping. Mapping of the plurality of CCEs included in the second PDCCH candidate is non-interleaved mapping. When the at least one of the first PDCCH candidate and the second PDCCH candidate is associated with another PDCCH candidate, the terminal device determines a reference PDCCH candidate based on the first PDCCH candidate, the second PDCCH candidate, and the another PDCCH candidate. The reference PDCCH candidate is used to determine at least one of time-frequency-space domain transmission resource information indicated by the DCI, uplink transmit power information indicated by the DCI, or uplink feedback information corresponding to the DCI.
In the foregoing method, both the terminal device and a network device determine the reference PDCCH candidate based on at least one pair of PDCCH candidates that have an association relationship, and determine scheduling information based on the reference PDCCH candidate, so that the terminal device and the network device can have consistent understanding of the reference PDCCH candidate, to ensure that the scheduling information determined by the terminal device is consistent with the scheduling information determined by the network device.
In a possible design, the first aggregation level is 8, and the second aggregation level is 16, or the first aggregation level is 16, and the second aggregation level is 8.

In a possible design, that the at least one of the first PDCCH candidate and the second PDCCH candidate is associated with another PDCCH candidate includes: The first PDCCH candidate is associated with a third PDCCH candidate, and there is no PDCCH candidate associated with the second PDCCH candidate. The first PDCCH candidate and the third PDCCH candidate are used to carry same DCI. The third PDCCH candidate is associated with a second control resource set. Alternatively, the second PDCCH candidate is associated with a fourth PDCCH candidate, and there is no PDCCH candidate associated with the first PDCCH candidate. The second PDCCH candidate and the fourth PDCCH candidate are used to carry same DCI. The fourth PDCCH candidate is associated with a third control resource set. Alternatively, the first PDCCH candidate is associated with a third PDCCH candidate, and the second PDCCH candidate is associated with a fourth PDCCH candidate. The first PDCCH candidate and the third PDCCH candidate are used to carry same DCI. The third PDCCH candidate is associated with a fourth control resource set. The second PDCCH candidate and the fourth PDCCH candidate are used to carry same DCI. The fourth PDCCH candidate is associated with the fourth control resource set or a fifth control resource set.

In a possible design, the reference PDCCH candidate includes one or more of a first reference PDCCH candidate, a second reference PDCCH candidate, a third reference PDCCH candidate, and a fourth reference PDCCH candidate. The first reference PDCCH candidate is a PDCCH candidate with a latest end OFDM symbol among the first PDCCH candidate, the second PDCCH candidate, and the another PDCCH candidate. Alternatively, the second reference PDCCH candidate is a PDCCH candidate with an earliest start OFDM symbol among the first PDCCH candidate, the second PDCCH candidate, and the another PDCCH candidate. Alternatively, the third reference PDCCH candidate is a PDCCH candidate corresponding to a search space set with a smallest index among search space sets respectively corresponding to the first PDCCH candidate, the second PDCCH candidate, and the another PDCCH candidate. Alternatively, the fourth reference PDCCH candidate is a PDCCH candidate corresponding to a control resource set with a smallest index among control resource sets respectively corresponding to the first PDCCH candidate, the second PDCCH candidate, and the another PDCCH candidate.

In a possible design, the time-frequency-space domain transmission resource information that is indicated by the DCI and that is determined by the terminal device based on the second reference PDCCH candidate includes at least one of a position that is of a preempted OFDM symbol and that is indicated by the DCI, whether a CI in the DCI takes effect, and a latest SRS resource position corresponding to an SRI in the DCI.

The uplink feedback information that corresponds to the DCI and that is determined by the terminal device based on the second reference PDCCH candidate includes at least one of a position of a HARQ-ACK feedback bit corresponding to the DCI in a HARQ-ACK codebook, and a physical uplink control channel PUCCH resource carrying a HARQ-ACK feedback corresponding to the DCI.

In a possible design, the time-frequency-space domain transmission resource information that is indicated by the DCI and that is determined by the terminal device based on the first reference PDCCH candidate includes at least one of a transmission delay of scheduling by using the DCI, a position that is of an OFDM symbol whose sending is canceled and that is indicated by the DCI, cancellation time that is of an SPS-based physical downlink shared channel PDSCH and that is indicated by the DCI, reception preparation time corresponding to a PDSCH or an aperiodic CSI-RS scheduled by using the DCI in cross-carrier scheduling, a start position of the PDSCH or the aperiodic CSI-RS scheduled by using the DCI, whether a preset receive beam is used in the PDSCH or the aperiodic CSI-RS scheduled by using the DCI, whether the PDSCH or a PUSCH scheduled by using the DCI satisfies a processing capability of the terminal device, and preparation time of the PUSCH or an SRS scheduled by using the DCI. The uplink transmit power information that is indicated by the DCI and that is determined by the terminal device based on the first reference PDCCH candidate includes: whether the DCI is located in an effective time window of TPC. The uplink feedback information that corresponds to the DCI and that is determined by the terminal device based on the first reference PDCCH candidate includes at least one of in a case that CSI carried in the DCI is triggered, a position relationship between a last OFDM symbol of a PDCCH monitoring time period corresponding to the DCI and a last OFDM symbol of a PDCCH monitoring time period corresponding to a bandwidth part BWP switching indication, a time domain position of a HARQ-ACK feedback corresponding to the DCI, whether a PHR corresponding to the DCI is a virtual PHR or a real PHR, occupation time of a CPU corresponding to aperiodic CSI triggered by the DCI, and calculation time of CSI scheduled by using the DCI.

In a possible design, the time-frequency-space domain transmission resource information that is indicated by the DCI and that is determined by the terminal device based on the third reference PDCCH candidate includes a PUCCH resource indicated by the DCI.

In a possible design, the time-frequency-space domain transmission resource information that is indicated by the DCI and that is determined by the terminal device based on the fourth reference PDCCH candidate includes a preset quasi co-location QCL assumption of a PDSCH scheduled by using the DCI.

In a possible design, the terminal device determines, based on the first PDCCH candidate, the second PDCCH candidate, and the another PDCCH candidate, a resource element RE unavailable for PDSCH transmission.

In the foregoing design, rate matching is performed based on the RE corresponding to the first PDCCH candidate, the second PDCCH candidate, and the another PDCCH candidate as a whole, so that the terminal device and the network device can avoid inconsistent understanding of PDSCH resource mapping, to improve PDSCH receiving performance.

In a possible design, the RE unavailable for the PDSCH transmission includes an RE occupied by the first PDCCH candidate, an RE occupied by the second PDCCH candidate, and an RE occupied by the another PDCCH candidate.

According to a second aspect, this application provides a communication method. The method includes: A network device sends DCI on either a first PDCCH candidate or a second PDCCH candidate. The first PDCCH candidate corresponds to a first aggregation level. The first PDCCH candidate includes a plurality of CCEs. The second PDCCH candidate corresponds to a second aggregation level. The second PDCCH candidate includes a plurality of CCEs. A start index of the CCE included in the first PDCCH candidate is the same as a start index of the CCE included in the second PDCCH candidate. The first PDCCH candidate and the second PDCCH candidate are associated with a first control resource set. The first control resource set occupies one OFDM symbol in time domain. Mapping of the plurality of CCEs included in the first PDCCH candidate is non-interleaved mapping. Mapping of the plurality of CCEs included in the second PDCCH candidate is non-interleaved mapping. When at least one of the first PDCCH candidate and the second PDCCH candidate is associated with another PDCCH candidate, the network device determines a reference PDCCH candidate based on the first PDCCH candidate, the second PDCCH candidate, and the another PDCCH candidate. The reference PDCCH candidate is used to determine at least one of time-frequency-space domain transmission resource information indicated by the DCI, uplink transmit power information indicated by the DCI, or uplink feedback information corresponding to the DCI.

In the foregoing method, both a terminal device and the network device determine the reference PDCCH candidate based on at least one pair of PDCCH candidates that have an association relationship, and determine scheduling information based on the reference PDCCH candidate, so that the terminal device and the network device can have consistent understanding of the reference PDCCH candidate, to ensure that the scheduling information determined by the terminal device is consistent with the scheduling information determined by the network device.

In a possible design, the first aggregation level is 8, and the second aggregation level is 16, or the first aggregation level is 16, and the second aggregation level is 8.

In a possible design, that at least one of the first PDCCH candidate and the second PDCCH candidate is associated with another PDCCH candidate includes: The first PDCCH candidate is associated with a third PDCCH candidate, and there is no PDCCH candidate associated with the second PDCCH candidate. The first PDCCH candidate and the third PDCCH candidate are used to carry same DCI. The third PDCCH candidate is associated with a second control resource set. Alternatively, the second PDCCH candidate is associated with a fourth PDCCH candidate, and there is no PDCCH candidate associated with the first PDCCH candidate. The second PDCCH candidate and the fourth PDCCH candidate are used to carry same DCI. The fourth PDCCH candidate is associated with a third control resource set. Alternatively, the first PDCCH candidate is associated with a third PDCCH candidate, and the second PDCCH candidate is associated with a fourth PDCCH candidate. The first PDCCH candidate and the third PDCCH candidate are used to carry same DCI. The third PDCCH candidate is associated with a fourth control resource set. The second PDCCH candidate and the fourth PDCCH candidate are used to carry same DCI. The fourth PDCCH candidate is associated with the fourth control resource set or a fifth control resource set.

In a possible design, the reference PDCCH candidate includes one or more of a first reference PDCCH candidate, a second reference PDCCH candidate, a third reference PDCCH candidate, and a fourth reference PDCCH candidate. The first reference PDCCH candidate is a PDCCH candidate with a latest end OFDM symbol among the first PDCCH candidate, the second PDCCH candidate, and the another PDCCH candidate. Alternatively, the second reference PDCCH candidate is a PDCCH candidate with an earliest start OFDM symbol among the first PDCCH candidate, the second PDCCH candidate, and the another PDCCH candidate. Alternatively, the third reference PDCCH candidate is a PDCCH candidate corresponding to a search space set with a smallest index among search space sets respectively corresponding to the first PDCCH candidate, the second PDCCH candidate, and the another PDCCH candidate. Alternatively, the fourth reference PDCCH candidate is a PDCCH candidate corresponding to a control resource set with a smallest index among control resource sets respectively corresponding to the first PDCCH candidate, the second PDCCH candidate, and the another PDCCH candidate.

In a possible design, the time-frequency-space domain transmission resource information that is indicated by the DCI and that is determined by the network device based on the second reference PDCCH candidate includes at least one of a position that is of a preempted OFDM symbol and that is indicated by the DCI, whether a CI in the DCI takes effect, and a latest SRS resource position corresponding to an SRI in the DCI. The uplink feedback information that corresponds to the DCI and that is determined by the network device based on the second reference PDCCH candidate includes at least one of a position of a HARQ-ACK feedback bit corresponding to the DCI in a HARQ-ACK codebook, and a PUCCH resource carrying a HARQ-ACK feedback corresponding to the DCI.

In a possible design, the time-frequency-space domain transmission resource information that is indicated by the DCI and that is determined by the network device based on the first reference PDCCH candidate includes at least one of a transmission delay of scheduling by using the DCI, a position that is of an OFDM symbol whose sending is canceled and that is indicated by the DCI, cancellation time that is of an SPS-based PDSCH and that is indicated by the DCI, reception preparation time corresponding to a PDSCH or an aperiodic CSI-RS scheduled by using the DCI in cross-carrier scheduling, a start position of the PDSCH or the aperiodic CSI-RS scheduled by using the DCI, whether a preset receive beam is used in the PDSCH or the aperiodic CSI-RS scheduled by using the DCI, whether the PDSCH or a PUSCH scheduled by using the DCI satisfies a processing capability of the terminal device, and preparation time of the PUSCH or an SRS scheduled by using the DCI. The uplink transmit power information that is indicated by the DCI and that is determined by the network device based on the first reference PDCCH candidate includes: whether the DCI is located in an effective time window of TPC. The uplink feedback information that corresponds to the DCI and that is determined by the network device based on the first reference PDCCH candidate includes at least one of in a case that CSI carried in the DCI is triggered, a position relationship between a last OFDM symbol of a PDCCH monitoring time period corresponding to the DCI and a last OFDM symbol of a PDCCH monitoring time period corresponding to a BWP switching indication, a time domain position of a HARQ-ACK feedback corresponding to the DCI, whether a PHR corresponding to the DCI is a virtual PHR or a real PHR, occupation time of a CPU corresponding to aperiodic CSI triggered by the DCI, and calculation time of CSI scheduled by using the DCI.

In a possible design, the time-frequency-space domain transmission resource information that is indicated by the DCI and that is determined by the network device based on the third reference PDCCH candidate includes a PUCCH resource indicated by the DCI.

In a possible design, the time-frequency-space domain transmission resource information that is indicated by the DCI and that is determined by the network device based on the fourth reference PDCCH candidate includes a preset QCL assumption of a PDSCH scheduled by using the DCI.

In a possible design, the network device determines, based on the first PDCCH candidate, the second PDCCH candidate, and the another PDCCH candidate, an RE unavailable for PDSCH transmission.

In the foregoing design, rate matching is performed based on the RE corresponding to the first PDCCH candidate, the second PDCCH candidate, and the another PDCCH candidate as a whole, so that the terminal device and the network device can avoid inconsistent understanding of PDSCH resource mapping, to improve PDSCH receiving performance.

In a possible design, the RE unavailable for the PDSCH transmission includes an RE occupied by the first PDCCH candidate, an RE occupied by the second PDCCH candidate, and an RE occupied by the another PDCCH candidate.

According to a third aspect, this application provides a communication method. The method includes:
A terminal device detects DCI on at least one of a first PDCCH candidate and a second PDCCH candidate. The first PDCCH candidate corresponds to a first aggregation level. The first PDCCH candidate includes a plurality of CCEs. The second PDCCH candidate corresponds to a second aggregation level. The second PDCCH candidate includes a plurality of CCEs. A start index of the CCE included in the first PDCCH candidate is the same as a start index of the CCE included in the second PDCCH candidate. The first PDCCH candidate and the second PDCCH candidate are associated with a first control resource set. The first control resource set occupies one OFDM symbol in time domain. Mapping of the plurality of CCEs included in the first PDCCH candidate is non-interleaved mapping. Mapping of the plurality of CCEs included in the second PDCCH candidate is non-interleaved mapping. When the first PDCCH candidate is associated with a third PDCCH candidate, and there is no PDCCH candidate associated with the second PDCCH candidate, the terminal device determines a reference PDCCH candidate based on the first PDCCH candidate and the third PDCCH candidate. The reference PDCCH candidate is used to determine at least one of time-frequency-space domain transmission resource information indicated by the DCI, uplink transmit power information indicated by the DCI, or uplink feedback information corresponding to the DCI.

In the foregoing method, both the terminal device and a network device determine the reference PDCCH candidate based on a pair of PDCCH candidates that have an association relationship, and determine scheduling information based on the reference PDCCH candidate, so that the terminal device and the network device can have consistent understanding of the reference PDCCH candidate, to ensure that the scheduling information determined by the terminal device is consistent with the scheduling information determined by the network device.

In a possible design, the first aggregation level is 8, and the second aggregation level is 16, or the first aggregation level is 16, and the second aggregation level is 8.

In a possible design, the first PDCCH candidate and the third PDCCH candidate are used to carry same DCI. The third PDCCH candidate is associated with a second control resource set.

In a possible design, the reference PDCCH candidate includes one or more of a first reference PDCCH candidate, a second reference PDCCH candidate, a third reference PDCCH candidate, and a fourth reference PDCCH candidate. The first reference PDCCH candidate is a PDCCH candidate with a later end OFDM symbol between the first PDCCH candidate and the third PDCCH candidate. Alternatively, the second reference PDCCH candidate is a PDCCH candidate with an earlier start OFDM symbol between the first PDCCH candidate and the third PDCCH candidate.

Alternatively, the third reference PDCCH candidate is a PDCCH candidate corresponding to a symbol search space set with a smaller index between a search space set corresponding to the first PDCCH candidate and a search space set corresponding to the third PDCCH candidate. The search space set corresponding to the first PDCCH candidate is different from the search space set corresponding to the third PDCCH candidate. Alternatively, the fourth reference PDCCH candidate is a PDCCH candidate corresponding to a control resource set with a smaller index between a control resource set corresponding to the first PDCCH candidate and a control resource set corresponding to the third PDCCH candidate. The control resource set corresponding to the first PDCCH candidate is different from the control resource set corresponding to the third PDCCH candidate.

In a possible design, the time-frequency-space domain transmission resource information that is indicated by the DCI and that is determined by the terminal device based on the second reference PDCCH candidate includes at least one of a position that is of a preempted OFDM symbol and that is indicated by the DCI, whether a CI in the DCI takes effect, and a latest SRS resource position corresponding to an SRI in the DCI. The uplink feedback information that corresponds to the DCI and that is determined by the terminal device based on the second reference PDCCH candidate includes at least one of a position of a HARQ-ACK feedback bit corresponding to the DCI in a HARQ-ACK codebook, and a PUCCH resource carrying a HARQ-ACK feedback corresponding to the DCI.

In a possible design, the time-frequency-space domain transmission resource information that is indicated by the DCI and that is determined by the terminal device based on the first reference PDCCH candidate includes at least one of a transmission delay of scheduling by using the DCI, a position that is of an OFDM symbol whose sending is canceled and that is indicated by the DCI, cancellation time that is of an SPS-based PDSCH and that is indicated by the DCI, reception preparation time corresponding to a PDSCH or an aperiodic CSI-RS scheduled by using the DCI in cross-carrier scheduling, a start position of the PDSCH or the aperiodic CSI-RS scheduled by using the DCI, whether a preset receive beam is used in the PDSCH or the aperiodic CSI-RS scheduled by using the DCI, whether the PDSCH or a PUSCH scheduled by using the DCI satisfies a processing capability of the terminal device, and preparation time of the PUSCH or an SRS scheduled by using the DCI. The uplink transmit power information that is indicated by the DCI and that is determined by the terminal device based on the first reference PDCCH candidate includes: whether the DCI is located in an effective time window of TPC. The uplink feedback information that corresponds to the DCI and that is determined by the terminal device based on the first reference PDCCH candidate includes at least one of in a case that channel state information CSI carried in the DCI is triggered, a position relationship between a last OFDM symbol of a PDCCH monitoring time period corresponding to the DCI and a last OFDM symbol of a PDCCH monitoring time period corresponding to a BWP switching indication, a time domain position of a HARQ-ACK feedback corresponding to the DCI, whether a PHR corresponding to the DCI is a virtual PHR or a real PHR, occupation time of a CPU corresponding to aperiodic CSI triggered by the DCI, and calculation time of CSI scheduled by using the DCI.

In a possible design, the time-frequency-space domain transmission resource information that is indicated by the DCI and that is determined by the terminal device based on the third reference PDCCH candidate includes a PUCCH resource indicated by the DCI.

In a possible design, the time-frequency-space domain transmission resource information that is indicated by the DCI and that is determined by the terminal device based on the fourth reference PDCCH candidate includes a preset QCL assumption of a PDSCH scheduled by using the DCI.

In a possible design, the terminal device determines, based on the first PDCCH candidate, the second PDCCH candidate, and the third PDCCH candidate, an RE unavailable for PDSCH transmission.

In the foregoing design, rate matching is performed based on the RE corresponding to the first PDCCH candidate, the second PDCCH candidate, and the another PDCCH candidate as a whole, so that the terminal device and the network device can avoid inconsistent understanding of PDSCH resource mapping, to improve PDSCH receiving performance.

In a possible design, the RE unavailable for the PDSCH transmission includes an RE occupied by the first PDCCH candidate, an RE occupied by the second PDCCH candidate, and an RE occupied by the third PDCCH candidate.

According to a fourth aspect, this application provides a communication method. The method includes: A network device sends DCI on either a first PDCCH candidate or a second PDCCH candidate. The first PDCCH candidate corresponds to a first aggregation level. The first PDCCH candidate includes a plurality of CCEs. The second PDCCH candidate corresponds to a second aggregation level. The second PDCCH candidate includes a plurality of CCEs. A start index of the CCE included in the first PDCCH candidate is the same as a start index of the CCE included in the second PDCCH candidate. The first PDCCH candidate and the second PDCCH candidate are associated with a first control resource set. The first control resource set occupies one OFDM symbol in time domain. Mapping of the plurality of CCEs included in the first PDCCH candidate is non-interleaved mapping. Mapping of the plurality of CCEs included in the second PDCCH candidate is non-interleaved mapping. When the first PDCCH candidate is associated with a third PDCCH candidate, and there is no PDCCH candidate associated with the second PDCCH candidate, a terminal device determines a reference PDCCH candidate based on the first PDCCH candidate and the third PDCCH candidate. The reference PDCCH candidate is used to determine at least one of time-frequency-space domain transmission resource information indicated by the DCI, uplink transmit power information indicated by the DCI, or uplink feedback information corresponding to the DCI.

In the foregoing method, both the terminal device and the network device determine the reference PDCCH candidate based on a pair of PDCCH candidates that have an association relationship, and determine scheduling information based on the reference PDCCH candidate, so that the terminal device and the network device can have consistent understanding of the reference PDCCH candidate, to ensure that the scheduling information determined by the terminal device is consistent with the scheduling information determined by the network device.

In a possible design, the first aggregation level is 8, and the second aggregation level is 16, or the first aggregation level is 16, and the second aggregation level is 8.

In a possible design, the first PDCCH candidate and the third PDCCH candidate are used to carry same DCI. The third PDCCH candidate is associated with a second control resource set.

In a possible design, the reference PDCCH candidate includes one or more of a first reference PDCCH candidate, a second reference PDCCH candidate, a third reference PDCCH candidate, and a fourth reference PDCCH candidate. The first reference PDCCH candidate is a PDCCH candidate with a later end OFDM symbol between the first PDCCH candidate and the third PDCCH candidate. Alternatively, the second reference PDCCH candidate is a PDCCH candidate with an earlier start OFDM symbol between the first PDCCH candidate and the third PDCCH candidate. Alternatively, the third reference PDCCH candidate is a PDCCH candidate corresponding to a symbol search space set with a smaller index between a search space set corresponding to the first PDCCH candidate and a search space set corresponding to the third PDCCH candidate. The search space set corresponding to the first PDCCH candidate is different from the search space set corresponding to the third PDCCH candidate. Alternatively, the fourth reference PDCCH candidate is a PDCCH candidate corresponding to a control resource set with a smaller index between a control resource set corresponding to the first PDCCH candidate and a control resource set corresponding to the third PDCCH candidate. The control resource set corresponding to the first PDCCH candidate is different from the control resource set corresponding to the third PDCCH candidate.

In a possible design, the time-frequency-space domain transmission resource information that is indicated by the DCI and that is determined by the network device based on the second reference PDCCH candidate includes at least one of a position that is of a preempted OFDM symbol and that is indicated by the DCI, whether a CI in the DCI takes effect, and a latest SRS resource position corresponding to an SRI in the DCI. The uplink feedback information that corresponds to the DCI and that is determined by the network device based on the second reference PDCCH candidate includes at least one of a position of a HARQ-ACK feedback bit corresponding to the DCI in a HARQ-ACK codebook, and a PUCCH resource carrying a HARQ-ACK feedback corresponding to the DCI.

In a possible design, the time-frequency-space domain transmission resource information that is indicated by the DCI and that is determined by the network device based on the first reference PDCCH candidate includes at least one of a transmission delay of scheduling by using the DCI, a position that is of an OFDM symbol whose sending is canceled and that is indicated by the DCI, cancellation time that is of an SPS-based PDSCH and that is indicated by the DCI, reception preparation time corresponding to a PDSCH or an aperiodic CSI-RS scheduled by using the DCI in cross-carrier scheduling, a start position of the PDSCH or the aperiodic CSI-RS scheduled by using the DCI, whether a preset receive beam is used in the PDSCH or the aperiodic CSI-RS scheduled by using the DCI, whether the PDSCH or a PUSCH scheduled by using the DCI satisfies a processing capability of the terminal device, and preparation time of the PUSCH or an SRS scheduled by using the DCI. The uplink transmit power information that is indicated by the DCI and that is determined by the network device based on the first reference PDCCH candidate includes: whether the DCI is located in an effective time window of TPC. The uplink feedback information that corresponds to the DCI and that is determined by the network device based on the first reference PDCCH candidate includes at least one of in a case that channel state information CSI carried in the DCI is triggered, a position relationship between a last OFDM symbol of a PDCCH monitoring time period corresponding to the DCI and a last OFDM symbol of a PDCCH monitoring time period corresponding to a BWP switching indication, a time domain position of a HARQ-ACK feedback corresponding to the DCI, whether a PHR corresponding to the DCI is a virtual PHR or a real PHR, occupation time of a CPU corresponding to aperiodic CSI triggered by the DCI, and calculation time of CSI scheduled by using the DCI.

In a possible design, the time-frequency-space domain transmission resource information that is indicated by the DCI and that is determined by the network device based on the third reference PDCCH candidate includes a PUCCH resource indicated by the DCI.

In a possible design, the time-frequency-space domain transmission resource information that is indicated by the DCI and that is determined by the network device based on the fourth reference PDCCH candidate includes a preset QCL assumption of a PDSCH scheduled by using the DCI.

In a possible design, the network device determines, based on the first PDCCH candidate, the second PDCCH candidate, and the third PDCCH candidate, an RE unavailable for PDSCH transmission.

In a possible design, the RE unavailable for the PDSCH transmission includes an RE occupied by the first PDCCH candidate, an RE occupied by the second PDCCH candidate, and an RE occupied by the third PDCCH candidate.

In a possible design, when the reference PDCCH candidate is a PDCCH candidate corresponding to a control resource set with a smaller index between a control resource set corresponding to the first PDCCH candidate and a control resource set corresponding to the third PDCCH candidate, the network device determines a preset quasi co-location QCL assumption of a PDSCH based on the DCI.

In a possible design, the network device determines, based on the first PDCCH candidate, the second PDCCH candidate, and the third PDCCH candidate, a resource element RE unavailable for PDSCH transmission.

In the foregoing design, rate matching is performed based on the RE corresponding to the first PDCCH candidate, the second PDCCH candidate, and the another PDCCH candidate as a whole, so that the terminal device and the network device can avoid inconsistent understanding of PDSCH resource mapping, to improve PDSCH receiving performance.

In a possible design, the RE unavailable for the PDSCH transmission includes an RE occupied by the first PDCCH candidate, an RE occupied by the second PDCCH candidate, and an RE occupied by the third PDCCH candidate.

According to a fifth aspect, this application further provides an apparatus. The apparatus may perform the foregoing method design. The apparatus may be a chip or a circuit that can perform the functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method according to any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. The function may be implemented by hardware, or may be implemented by executing corresponding software by hardware. The hardware or the software includes one or more units that correspond to the foregoing functions.

According to a sixth aspect, this application provides a computer-readable storage medium. The computer-readable storage medium stores a computer program, and when the computer program is run on an apparatus, the method according to any one of the possible designs is performed.

According to a seventh aspect, this application provides a computer program product. The computer program product includes a computer program, and when the computer program is run on an apparatus, the method according to any one of the possible designs is performed.

According to an eighth aspect, this application provides a communication system. The communication system includes a terminal device and a network device. The terminal device is configured to perform the method according to the designs of the first aspect, and the network device is configured to perform the method according to the designs of the second aspect, or the terminal device is configured to perform the method according to the designs of the third aspect, and the network device is configured to perform the method according to the designs of the fourth aspect.

**BRIEF DESCRIPTION OF DRAWINGS**

FIG. 1 is a diagram of an architecture of a mobile communication system to which an embodiment of this application is applied;
FIG. 2 is a diagram of RBs occupied by a CORESET according to an embodiment of this application;
FIG. 3 is a diagram of possible implementations of an REG bundle according to an embodiment of this application;
FIG. 4 is a diagram of CCEs included in a CORESET according to an embodiment of this application;
FIG. 5 is a diagram of a non-interleaved manner according to an embodiment of this application;
FIG. 6 is a diagram in which SSSs are associated with CORESETs according to an embodiment of this application;
FIG. 7 is a diagram in which a TRP 1 and a TRP 2 both serve as a cooperative base station to provide services for a terminal device according to an embodiment of this application;
FIG. 8 is a diagram in which an SSS 1 is associated with an SSS 2 according to an embodiment of this application;
FIG. 9 is a diagram in which an MO of an SSS 1 is associated with an MO of an SSS 2 according to an embodiment of this application;
FIG. 10A is a first diagram of distribution of PDCCH candidates according to an embodiment of this application;
FIG. 10B is a second diagram of distribution of PDCCH candidates according to an embodiment of this application;
FIG. 10C is a third diagram of distribution of PDCCH candidates according to an embodiment of this application;
FIG. 10D is a fourth diagram of distribution of PDCCH candidates according to an embodiment of this application;

FIG. 10E is a fifth diagram of distribution of PDCCH candidates according to an embodiment of this application;
FIG. 11A is a sixth diagram of distribution of PDCCH candidates according to an embodiment of this application;
FIG. 11B is a seventh diagram of distribution of PDCCH candidates according to an embodiment of this application;
FIG. 12 is a diagram of a possible application scenario according to an embodiment of this application;
FIG. 13 is a first overview flowchart of a communication method according to an embodiment of this application;
FIG. 14 is a second overview flowchart of a communication method according to an embodiment of this application;
FIG. 15 is a first diagram of a structure of a communication apparatus according to an embodiment of this application; and
FIG. 16 is a second diagram of a structure of a communication apparatus according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. In the specification, claims, and accompanying drawings of this application, the terms "first", "second", corresponding term numbers, and the like are intended to distinguish between similar objects but do not necessarily describe a specific order or sequence. It should be understood that the terms used in such a way are interchangeable in proper circumstances, which is merely a discrimination manner that is used when objects having a same attribute are described in embodiments of this application. In addition, the terms "include", "have" and any other variants thereof mean to cover the non-exclusive inclusion, so that a process, method, system, product, or device that includes a series of units is not necessarily limited to those units, but may include other units not expressly listed or inherent to such a process, method, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be in a singular form or a plural form.

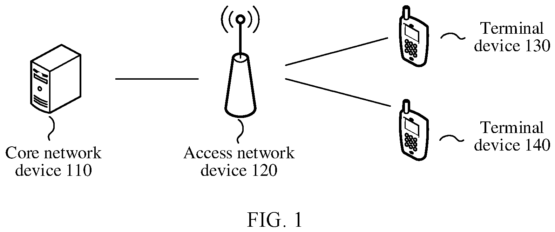

FIG. 1 is a diagram of an architecture of a mobile communication system to which an embodiment of this application is applied. As shown in FIG. 1, the mobile communication system includes a core network device 110, an access network device 120, and at least one terminal device (for example, a terminal device 130 and a terminal device 140 shown in FIG. 1). The terminal device is connected to the access network device in a wireless manner, and the access network device is connected to the core network device in a wireless or wired manner. The core network device and the access network device may be different physical devices that are independent of each other, or functions of the core network device and logical functions of the access network device may be integrated into a same physical device, or some functions of the core network device and some functions of the access network device may be integrated into one physical device. The terminal device may be located at a fixed position, or may be mobile. FIG. 1 is only a diagram. The communication system may further include other network devices, for example, may further include a wireless relay device and a wireless backhaul device. This is not shown in FIG. 1. In embodiments of this application, quantities of core network devices, access network devices, and terminal devices included in the mobile communication system are not limited.

The terminal device is connected to the access network device in a wireless manner, to access the mobile communication system. The access network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. Alternatively, the access network device may be a module or a unit that implements some functions of a base station, for example, may be a central unit (central unit, CU), or a distributed unit (distributed unit, DU). A specific technology and a specific device form that are used by the access network device are not limited in embodiments of this application. In this application, the access network device is referred to as a network device for short. Unless otherwise specified, the network device is the access network device.

The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application.

The network device and the terminal device may be deployed on the land, indoors or outdoors, handheld or vehicle-mounted, may be deployed on the water surface, or may be deployed on a plane, a balloon, and a satellite in the air. Application scenarios of the network device and the terminal device are not limited in embodiments of this application.

The network device and the terminal device may communicate with each other by using a licensed spectrum, may communicate with each other by using an unlicensed spectrum, or may communicate with each other by using both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

In embodiments of this application, a time domain symbol may be an OFDM symbol, or may be a discrete Fourier transform-spread-OFDM (Discrete Fourier Transform-spread-OFDM, DFT-s-OFDM) symbol. Unless otherwise specified, all symbols in embodiments of this application are time domain symbols.

It may be understood that in embodiments of this application, a physical downlink shared channel (physical downlink shared channel, PDSCH), a PDCCH, and a physical uplink shared channel (physical uplink shared channel, PUSCH) are merely used as examples of a downlink data channel, a downlink control channel, and an uplink data channel. In different systems and different scenarios, a data channel and a control channel may have different names. This is not limited in embodiments of this application.

The technical solutions provided in embodiments of this application may be applied to various communication systems. This is not limited in this application. For example, embodiments of this application may be applied to an NR system, or may be applied to another system, for example, a long term evolution (long term evolution, LTE) system, a 6G system, or another future-oriented new system. In addition, the term "system" and "network" may be substituted for each other.

For ease of understanding embodiments of this application, several basic concepts in embodiments of this application are briefly described.

1. Control resource set (CORESET):

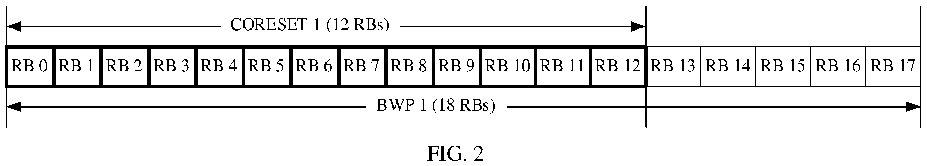

The CORESET indicates a physical resource occupied by a PDCCH, and the PDCCH is used to carry DCI sent by a network device. The CORESET is usually carried in radio resource control (radio resource control, RRC) signaling. For example, in frequency domain, a quantity of resource blocks (resource block, RB) occupied by the CORESET is an integer multiple of 6, and the RB occupied by the CORESET may be indicated by using a bitmap (bitmap). For example, in FIG. 2, a bandwidth part (bandwidth part, BWP) 1 (which may be understood as a system bandwidth) occupies 18 RBs in total, for example, RB 0 to RB 17 in FIG. 2. Therefore, RBs occupied by a CORESET 1 may be indicated by using three bits. A first bit indicates whether the CORESET 1 occupies the RB 0 to the RB 5, a second bit indicates whether the CORESET 1 occupies the RB 5 to the RB 11, and a third bit indicates whether the CORESET 1 occupies the RB 12 to the RB 17. For example, if values of the three bits are "110", it indicates that the CORESET 1 occupies first 12 RBs, that is, the RB 0 to the RB 11. In time domain, the CORESET may occupy one to three consecutive OFDM symbols.

It should be noted that the CORESET may be understood as a candidate resource position used to carry the DCI, and an actual resource position used to carry the DCI needs to be determined by a terminal device by performing, according to a preset rule, a plurality of times of DCI blind monitoring on the physical resource indicated by the CORESET.

In comparison with sending the DCI on a fixed physical resource, flexibility of sending the DCI by the network device can be improved by configuring the CORESET. For example, CORESETs configured by the network device for a plurality of terminal devices respectively may be shared (in other words, the CORESETs configured for the plurality of terminals may occupy a same RB), so that the network device can select, based on an actual scheduling status and the CORESET configured for each terminal device, a physical resource for sending DCI to the terminal device.

In addition, the CORESET further configures quasi co-location (quasi co-location, QCL) assumption information for sending the DCI on the physical resource occupied by the PDCCH, a scrambling code identity (identity, ID) of a demodulation reference signal (demodulation reference signal, DMRS), a precoding manner, an interleaved manner, and the like.

2. QCL assumption:

The QCL assumption represents a large-scale characteristic of a channel through which a sent signal passes in radio propagation space, and may specifically include:

Doppler shift (doppler shift): The doppler shift occurs in signals because of an angle between a moving direction of a receive end and a direction in which the signal arrives, for example, a frequency at which the signal is sent is fc, and a frequency at which the signal is received is fc+/- fd due to movement of the receive end, where fd is the doppler shift.

Doppler spread (doppler spread): Because signals are propagated through a scattering path, a signal transmission frequency band spreads out of the band at the receive end, causing the doppler spread.

Delay spread (delay spread): A transmit end sends a pulse signal, and a signal received at the receive end includes not only the signal, but also includes a signal of the pulse signal at each delay point, which causes time width extension of the signal.

Average delay (average delay): The average delay indicates an average delay of signals arriving at the receive end after the signals pass through a multipath channel.

Spatial Rx parameter (spatial Rx parameter): The transmit end uses a beamforming (beamforming) solution (digital weighted sum) to send a signal, so that the sent signal has a directional transmission characteristic in space. The receive end may use a beamforming solution corresponding to the beamforming solution used by the transmit end, to improve signal receiving performance. The spatial Rx parameter information indicates a receive beamforming solution. A QCL assumption is individually configured in each CORESET, and a QCL assumption delivered by DCI corresponding to a search space set associated with the CORESET is the QCL assumption configured for the CORESET.

3. Precoding manner:

Precoding manners may include but are not limited to the following two types:

Broadband precoding: The broadband precoding means that a signal is sent through same precoding on consecutive RBs of a CORESET in frequency domain.

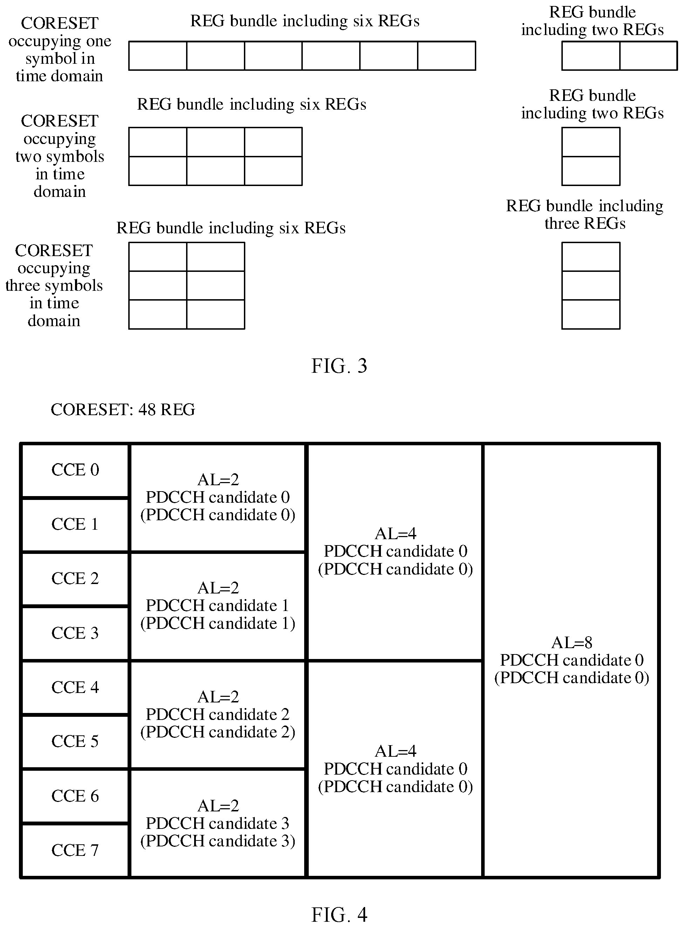

Sub-band precoding: The sub-band precoding means that same precoding is used in each REG bundle at a granularity of the resource element group (Resource Element Group, REG) bundle (REG bundle), where different precoding may be used between REG bundles. Each REG bundle may include 2, 3, or 6 REGs. The REG bundle may use a possible implementation shown in FIG. 3. The REG is a basic physical resource unit of a PDCCH. Each REG includes one physical resource block (physical resource block, PRB), that is, 12 subcarriers in frequency domain, and includes one OFDM symbol in time domain.

4. DCI blind monitoring:

The DCI blind monitoring means that operations such as DCI monitoring, channel estimation, and decoding are performed on a specific physical resource in a physical resource indicated by a CORESET based on a DCI format, a scrambling manner, and the like according to a preset rule.

5. PDCCH candidate (PDCCH candidates):

The PDCCH candidate may be understood as a basic granularity of DCI blind monitoring performed by a terminal device. One PDCCH candidate corresponds to one time of DCI blind monitoring or one DCI monitoring process (including performing operations such as parsing, decoding, and determining an information bit), and one PDCCH candidate corresponds to a specific physical resource on a CORESET.

A quantity of PDCCH candidates indicates complexity of monitoring DCI by the terminal device, or overheads of a DCI processing operation. A size and position of a physical resource corresponding to each PDCCH candidate may be determined based on a quantity and positions of control channel elements (control channel elements, CCEs).

To describe the size and position of the physical resource corresponding to the PDCCH candidate, the following first briefly describes concepts of an aggregation level (aggregation level, AL) and the CCE.

Aggregation level (aggregation level, AL): The aggregation level represents a quantity of time-frequency resources occupied by one PDCCH candidate, and a value of the AL represents a quantity of CCEs included in one PDCCH candidate. For example, in an NR system, candidate values of the AL may be f 1, 2, 4, 8, 16}. Different PDCCH candidates may correspond to different AL values, so that scheduling flexibility of a network device can be improved. For example, when a transmission channel condition is poor, the network device may send the DCI by using a PDCCH candidate corresponding to an AL with a large value, to improve DCI transmission reliability. Conversely, the network device may send the DCI by using a PDCCH candidate corresponding to an AL with a small value, to reduce signaling overheads.

CCE: The CCE represents an actual physical resource position occupied by each PDCCH candidate in one CORESET. For example, in FIG. 4, one CORESET includes 8 CCEs in total, that is, a CCE 0 to a CCE 7. AL=2 corresponds to four PDCCH candidates, and numbers of the PDCCH candidates corresponding to the AL=2 are sequentially 0, 1, 2, and 3. AL=4 corresponds to two PDCCH candidates, and numbers of the PDCCH candidates corresponding to the AL=2 are sequentially 0 and 1. AL=8 corresponds to one PDCCH candidate, and a number of the PDCCH candidate corresponding to the AL=8 is 0.

A CCE ID included in each PDCCH candidate may be determined based on section 10.1 in TS 38.213 g70. The following formula is used:

$$L \cdot \left\{ \left( Y_{p,n_{s,f}^{\mu}} + \left\lfloor \frac{m_{s,n_{CI}} \cdot N_{\mathrm{CCE},p}}{L \cdot M_{s,\max}^{(L)}} \right\rfloor + n_{CI} \right) \bmod \left\lfloor N_{\mathrm{CCE},p} / L \right\rfloor \right\} + i$$

L is an aggregation level corresponding to the PDCCH candidate, $N_{CCE,p}$ is a quantity of CCEs included in a CORESET associated with the PDCCH candidate,p is a CORESET number, $m_{s,ncl}$ is an array of 0, ..., M-1 sequentially corresponding to IDs of PDCCH candidates, M is a quantity of PDCCH candidates to be monitored at an aggregation level L in an SSS number *s* in a carrier number nCI, and the $M^{(L)}_{s,max}$ is a maximum quantity of PDCCH candidates configured at an aggregation level L in an SSS number *s* in each carrier, where i=0, ..., L-1, and the nCI is determined based on carrier indication information.

$$Y_{p,n_{s,f}^{\mu}} = \left( A_p \cdot Y_{p,n_{s,f}^{\mu}-1} \right) \bmod D$$

$n_{s,f}^{\mu}$ is a number of a slot in which the monitored DCI is located, a start value $A_{P,-1}=n_{RNTI}$, where the $n_{RNTI}$ is related to a radio network temporary identity (radio network tempory identity, RNTI) corresponding to the DCI, and a value of $A_P$ is related to the CORESET number *p*. For example, when *p*mod3=0, $A_P$=39827, when *p*mod3=1, $A_P$=39829, and when *p*mod3=2, $A_P$=39839, and D=65537.

Therefore, a CCE position corresponding to a PDCCH candidate is related to a CORESET configuration (that is, related to a quantity of CCEs included in the CORESET), is related to an AL corresponding to the PDCCH candidate, and changes with time, so that a probability of a resource conflict caused when a plurality of terminal devices occupy the same RB can be reduced.

6. Non-interleaved (non-interleaved) manner:

One CCE includes six REGs, and a correspondence between a number of each CCE and a number of an REG bundle corresponding to the CCE may also be referred to as REG-to-CCE mapping. Two mapping manners are supported in NR: the non-interleaved manner and an interleaved manner. Embodiments of this application do not relate to the interleaved manner, and the following describes only the non-interleaved manner.

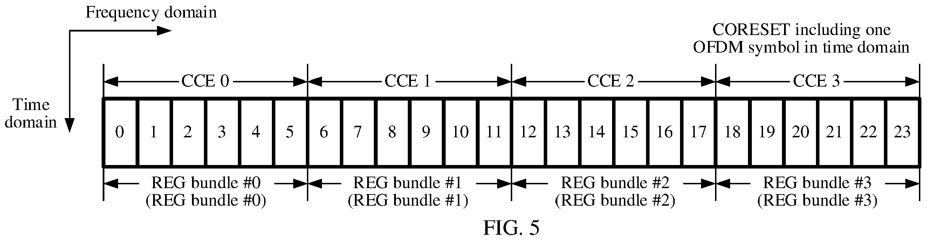

The non-interleaved manner means that CCEs include one or more REG bundles in ascending order of numbers. For example, in FIG. 5, a CORESET includes 24 REGs, and each REG bundle includes six REGs. The REGs may be sequentially numbered in ascending order of frequencies. In this case, in the non-interleaved manner, the CORESET may be divided into four CCEs shown in FIG. 5, which are respectively a CCE 0, a CCE 1, a CCE 2, and a CCE 3. The CCE 0 includes six REGs corresponding to an REG bundle #0, and the CCE 1 includes six REGs corresponding to an REG bundle #1, the CCE 2 includes six REGs corresponding to an REG bundle #2, and the CCE 3 includes six REGs corresponding to an REG bundle #3.

7. Search space set (Search Space set, SSS)

The search space set is a set including related configuration information of a plurality of PDCCH candidates. One SSS may be associated with at least one CORESET. The SSS is associated with the CORESET, indicating that a physical resource occupied by a PDCCH candidate configured in the SSS is determined based on a configuration of the CORESET. The SSS may be used to configure parameters such as a quantity of PDCCH candidates corresponding to each AL value, and a DCI monitoring occasion (monitoring occasion, MO) (corresponding to a time domain position sent by the DCI) of each PDCCH candidate. The DCI monitoring occasion is defined by a monitoring periodicity configured in the search space set, a monitoring periodicity offset, and a quantity of OFDM symbols configured in the associated CORESET.

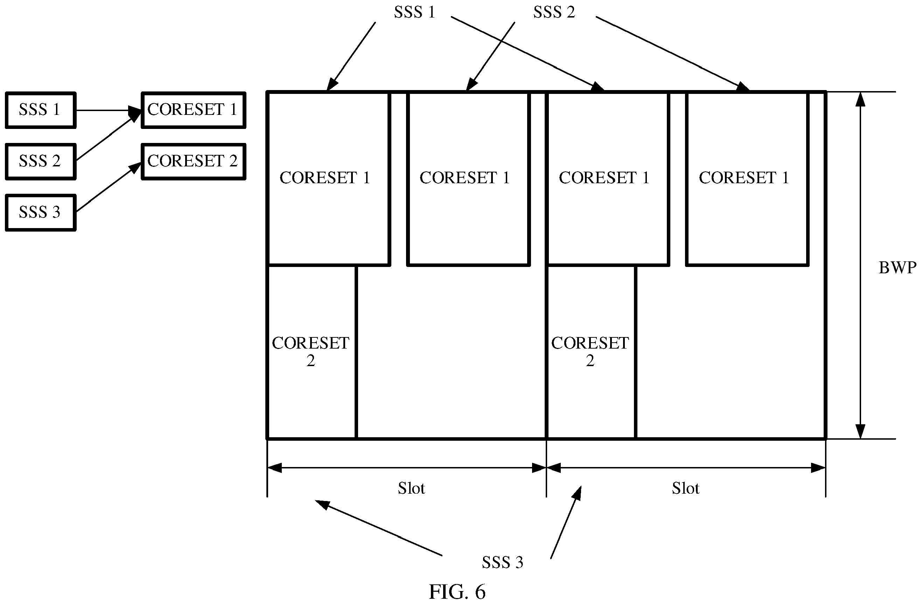

For example, in FIG. 6, an SSS 1 and an SSS 2 both are associated with the CORESET 1, and an SSS 3 is associated with a CORESET 2. In this case, the terminal device may determine, on DCI monitoring occasions determined by the SSS 1 and the SSS 2, a frequency domain position of the monitored DCI based on configuration information of the CORESET 1, and determine, on a DCI monitoring occasion determined by the SSS 3, the frequency domain position of the monitored DCI based on configuration information of the CORESET 2.

8. Joint transmission mechanism with a plurality of transmission reception points (transmission reception point, TRPs)

For a same DCI information bit (or source), coded bits may be formed in a same coding manner or different coding manners, and then the coded bits are separately sent by a plurality of TRPs on different time-frequency resources. A terminal device may separately receive the coded bits on the different time-frequency resources, and then perform a joint parsing operation to obtain the DCI information bit (or source). For example, the terminal device separately performs channel estimation on the different time-frequency resources, demodulates received signals obtained from the different time-frequency resources, and obtains corresponding likelihood values (or soft information) for combination. Therefore, a signal-to-noise ratio (signal-to-noise ratio, SNR) of transmission can be improved by performing the foregoing operations, to improve the DCI transmission reliability. In addition, the foregoing operations can further avoid a problem that DCI cannot be transmitted because a transmission link from the terminal device to a TRP is interrupted due to a channel change.

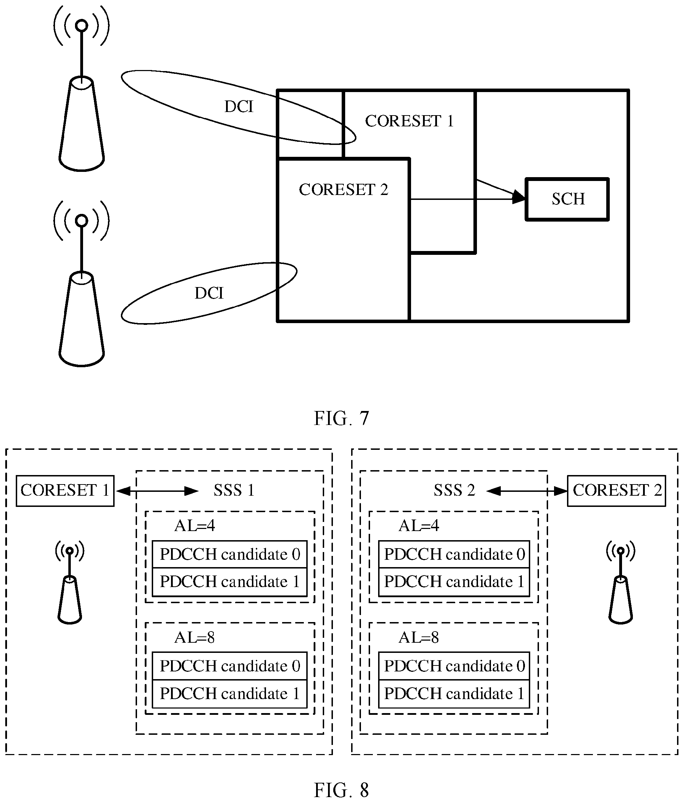

As shown in FIG. 7, a TRP 1 and a TRP 2 both serve as a cooperative base station to provide services for a terminal device. DCI sent by the TRP 1 is associated with the CORESET 1 (configuration of a first QCL assumption may be understood as corresponding to a characteristic of a channel from UE to the TRP 1), and DCI sent by the TRP 2 is associated with the CORESET 2 (configuration of a second QCL assumption may be understood as corresponding to a characteristic of a channel from the UE to the TRP 2). There is an association relationship between a PDCCH candidate used to carry the DCI sent by the TRP 1 and a PDCCH candidate used to carry the DCI sent by the TRP 2. Therefore, the DCI carried by the two PDCCH candidates is repeatedly transmitted.

Optionally, that DCI information bits delivered on the mutually associated PDCCH candidates are the same may specifically include that sources are the same and encoded bits are the same, or quantities of encoded bits are the same.

Optionally, soft information received by the UE on the mutually associated PDCCH candidates may be combined, or may be jointly decoded, or may be separately decoded to further combine decoding results.

Further, how to notify the terminal device of specific PDCCH candidates (that is, the specific PDCCH candidates having an association relationship) that correspond to different TRPs and on which the DCI is repeatedly transmitted may be implemented by configuring an association relationship between two SSSs.

For example, a first SSS is associated with a second SSS, the first SSS needs to be associated with a first CORESET, and the second SSS needs to be associated with a second CORESET. The first CORESET corresponds to a first TRP, and the second CORESET corresponds to a second TRP. The first CORESET is different from the second CORESET, the first TRP is different from the second TRP, and an AL value configured by the first SSS is the same as an AL value configured by the second SSS. A quantity of PDCCH candidates corresponding to each AL value configured by the first SSS is the same as a quantity of PDCCH candidates corresponding to each AL value configured by the second SSS. It is agreed on in the protocol that in PDCCH candidates respectively corresponding to the first SSS and the second SSS, there is an association relationship between two PDCCH candidates having a same AL and a same PDCCH candidate ID, and in the PDCCH candidates respectively corresponding to the first SSS and the second SSS, PDCCH candidate IDs are numbered from a same value based on each AL value, for example, the PDCCH candidate IDs are numbered from 0.

In a possible manner, the search space set carries an index of a search space set associated with the search space set. For example, if a search space set 0 carries an index of a search space set 1 associated with the search space set 0, the search space set 0 and the search space set 1 are associated with each other. AL values included in search space 0 and search space 1 are the same. For example, both AL8 and AL16 are included, and quantities of PDCCH candidates corresponding to the AL values are the same. For example, in the two search space sets, AL8 includes two PDCCH candidates, and AL16 includes two PDCCH candidates. In this case, PDCCH candidates with the same AL value and a same PDCCH candidate index are associated with each other.

Optionally, mutually associated search space sets have a same quantity of monitoring occasions in one slot.

As shown in FIG. 8, an SSS 1 is associated with a CORESET 1. An SSS 2 is associated with a CORESET 2. The CORESET 1 corresponds to the TRP 1. The CORESET 2 corresponds to the TRP 2. When the SSS 1 is associated with the SSS 2, a PDCCH candidate whose PDCCH candidate ID is 0 and that corresponds to AL=4 in PDCCH candidates corresponding to the SSS 1 is associated with a PDCCH candidate whose PDCCH candidate ID is 0 and that corresponds to AL=4 in PDCCH candidates corresponding to the SSS 2. There is an association relationship between DCI detected by a terminal device on the foregoing two PDCCH candidates, and the terminal device may perform a soft combination operation. Similarly, a PDCCH candidate whose PDCCH candidate ID is 1 and that corresponds to the AL=4 in the PDCCH candidates corresponding to the SSS 1 is associated with a PDCCH candidate whose PDCCH candidate ID is 1 and that corresponds to the AL=4 in the PDCCH candidates corresponding to the SSS 2. A PDCCH candidate whose PDCCH candidate ID is 0 and that corresponds to AL=8 in the PDCCH candidates corresponding to the SSS 1 is associated with a PDCCH candidate whose PDCCH candidate ID is 0 and that corresponds to AL=8 in the PDCCH candidates corresponding to the SSS 2. APDCCH candidate whose PDCCH candidate ID is 1 and that corresponds to the AL=8 in the PDCCH candidates corresponding to the SSS 1 is associated with a PDCCH candidate whose PDCCH candidate ID is 1 and that corresponds to the AL=8 in the PDCCH candidates corresponding to the SSS 2.

In addition, because each PDCCH candidate corresponds to a periodic MO in time domain, it is further agreed on in the protocol that in one slot (slot), PDCCH candidates corresponding to nth monitoring occasions corresponding to two mutually associated SSSs are associated with each other, where n is a positive integer. In this manner, the two mutually associated PDCCH candidates and corresponding time-frequency resources can be uniquely determined, so that a pair of pieces of repeatedly transmitted DCI are determined.

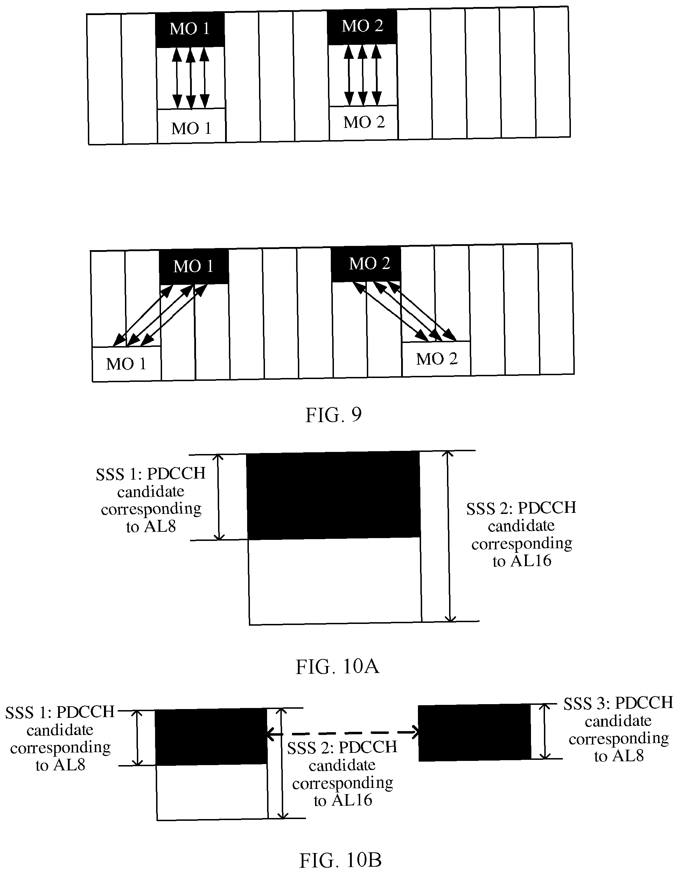

As shown in FIG. 9, a first PDCCH candidate appears twice in one slot, in other words, there are two MOs, which are respectively an MO 1 and an MO 2, and correspond to two black blocks in FIG. 9. A second PDCCH candidate appears twice in one slot, in other words, there are two MOs, which are respectively an MO 1 and an MO 2, and correspond to two white blocks in FIG. 9.

PDCCH candidates corresponding to an SSS 1 include the first PDCCH candidate. PDCCH candidates corresponding to an SSS 2 include the second PDCCH candidate. The SSS 1 is associated with the SSS 2. The first PDCCH candidate is associated with the second PDCCH candidate. Specifically, an AL corresponding to the first PDCCH is the same as an AL corresponding to the second PDCCH candidate, and a PDCCH candidate ID of the first PDCCH is the same as a PDCCH candidate ID of the second PDCCH. Because both the first PDCCH and the second PDCCH have the two MOs in the one slot, correspondences between the two MOs corresponding to the first PDCCH and the two MOs corresponding to the second PDCCH further need to be determined, to uniquely determine the two mutually associated PDCCH candidates and the corresponding time-frequency resources, so that the pair of pieces of repeatedly transmitted DCI are determined. It can be learned from the protocol agreement that the first PDCCH candidate corresponding to the MO 1 shown by the black block is associated with the second PDCCH candidate corresponding to the MO 1 shown by the white block, and the first PDCCH candidate corresponding to the MO 2 shown by the black block is associated with the second PDCCH candidate corresponding to the MO 2 shown by the white block.

9. PDSCH rate matching

When a codeword of a PDSCH is mapped on a time-frequency resource, some REs occupied by other channels or reference signals in a scheduling bandwidth of the PDSCH are bypassed, so that a time-frequency resource actually occupied for transmitting the PDSCH is less than a pre-indicated PDSCH resource. In this case, a corresponding pre-indicated bit rate is adjusted based on the actually occupied time-frequency resource. This process is referred to as the PDSCH rate matching.

10. Scheduling information

The scheduling information may include but is not limited to at least one of time-frequency-space domain transmission resource information indicated by DCI, uplink transmit power information indicated by DCI, or uplink feedback information corresponding to DCI.

The scheduling information is determined in the following two cases:

Case 1: A terminal device detects a case in which no association relationship is configured for a PDCCH candidate of DCI, and determines scheduling information based on a time-frequency resource position at which the DCI is located. For details, refer to related content in an existing protocol. Details are not described herein.

Case 2: A terminal device detects a case in which an association relationship is configured for a PDCCH candidate of DCI, and the terminal device needs to first determine a reference PDCCH candidate based on two PDCCH candidates that have the association relationship, and determine scheduling information based on the reference PDCCH.

In an example, the terminal device uses, as the reference PDCCH candidate, a PDCCH candidate whose start position is in the front of the two PDCCH candidates having the association relationship, and the time-frequency-space domain transmission resource information that is indicated by the DCI and that is determined based on the reference PDCCH candidate includes at least one of a position that is of a preempted OFDM symbol and that is indicated by the DCI, whether an uplink sending cancellation indication (Cancellation indication, CI) in the DCI takes effect, and a latest sounding reference signal (sounding reference signal, SRS) resource position corresponding to a sounding reference signal indication (sounding reference signal indication, SRI) in the DCI.

In an optional manner, the terminal device uses, as the reference PDCCH candidate, the PDCCH candidate whose start position is in the front of the two PDCCH candidates having the association relationship. It may also be equivalent to a case in which the terminal device uses monitoring occasions corresponding to the two PDCCH candidates as a whole, and determines that start OFDM symbol positions corresponding to the two PDCCH candidates are a start OFDM symbol position corresponding to the whole.

The uplink feedback information that corresponds to the DCI and that is determined by the terminal device based on the reference PDCCH candidate includes at least one of a position of a hybrid automatic repeat request acknowledgment (hybrid automatic repeat request acknowledgment, HARQ-ACK) feedback bit corresponding to the DCI in a HARQ-ACK codebook, and a physical uplink control channel (physical uplink control channel, PUCCH) resource carrying a HARQ-ACK feedback corresponding to the DCI.

In an example, the terminal device uses, as the reference PDCCH candidate, a PDCCH candidate with a later end position in the two PDCCH candidates having the association relationship. The time-frequency-space domain transmission resource information that is indicated by the DCI and that is determined by the terminal device based on the reference PDCCH candidate includes at least one of a transmission delay of scheduling by using the DCI, a position that is of an OFDM symbol whose sending is canceled and that is indicated by the DCI, cancellation time that is of a semi-persistent scheduling (semi-persistent scheduling, SPS)-based PDSCH and that is indicated by the DCI, reception preparation time corresponding to a PDSCH or an aperiodic channel state information reference signal (channel state information reference signal, CSI-RS) scheduled by using the DCI in cross-carrier scheduling, a start position of the PDSCH or the aperiodic CSI-RS scheduled by using the DCI, whether a preset receive beam is used in the PDSCH or the aperiodic CSI-RS scheduled by using the DCI, whether the PDSCH or a PUSCH scheduled by using the DCI satisfies a processing capability of the terminal device, and preparation time of the PUSCH or an SRS scheduled by using the DCI.

The uplink transmit power information that is indicated by the DCI and that is determined by the terminal device based on the reference PDCCH candidate includes: whether the DCI is located in an effective time window of transmit power control (Transmission Power Command, TPC).

In an optional manner, the terminal device uses, as the reference PDCCH candidate, the PDCCH candidate with a later end position in the two PDCCH candidates having the association relationship. It may also be equivalent to a case in which the terminal device uses monitoring occasions corresponding to the two PDCCH candidates as a whole, and determines that end OFDM symbol positions corresponding to the two PDCCH candidates are an end OFDM symbol position corresponding to the whole.

The uplink feedback information that corresponds to the DCI and that is determined by the terminal device based on the reference PDCCH candidate includes at least one of in a case that channel state information (channel state information, CSI) carried in the DCI is triggered, a position relationship between a last OFDM symbol of a PDCCH monitoring time period corresponding to the DCI and a last OFDM symbol of a PDCCH monitoring time period corresponding to a BWP switching indication, a time domain position of a HARQ-ACK feedback corresponding to the DCI, whether a power headroom report (power headroom report, PHR) corresponding to the DCI is a virtual PHR or a real PHR, occupation time of a central processing unit (central processing unit, CPU) corresponding to aperiodic CSI triggered by the DCI, and calculation time of CSI scheduled by using the DCI.

In an example, the terminal device uses, as the reference PDCCH candidate, a PDCCH candidate with a smaller SSS index between SSSs corresponding to the two PDCCH candidates having the association relationship, and the time-frequency-space domain transmission resource information that is indicated by the DCI and that is determined based on the PDCCH candidate includes a PUCCH resource indicated by the DCI.

In an example, the terminal device uses, as the reference PDCCH candidate, a PDCCH candidate a smaller CORESET index between CORESETs corresponding to the two PDCCH candidates having the association relationship, and the time-frequency-space domain transmission resource information that is indicated by the DCI and that is determined by the terminal device based on the reference PDCCH candidate includes a preset QCL assumption of a PDSCH scheduled by using the DCI.

It may be understood that the scheduling information may further include other content, and this is merely an example.

It can be learned from a background technology that, because during polar code encoding, mother code with a specific length is repeated to obtain a code word at a specific AL, the scheduling information determined by the terminal device may be inconsistent with the scheduling information determined by the network device. Further, the applicant finds that the problem caused by the foregoing reasons in the background technology is more prominent in a scenario that satisfies the following conditions.

The following describes only examples of the conditions and possible scenarios that need to be satisfied for the problem in the background technology. It may be understood that the following conditions and scenarios are merely examples, and do not limit embodiments of this application. In addition, for ease of understanding, AL8 and AL16 are used as examples in the following examples. However, embodiments of this application are not limited to AL8 and AL16, and may be further applied to another AL.

It should be noted that the problem that the scheduling information determined by the terminal device may be inconsistent with the scheduling information determined by the network device and that is mentioned in the background technology generally occurs in a scenario that satisfies the following conditions: The following four conditions need to be satisfied at the same time.

Condition 1: A first PDCCH candidate and a second PDCCH candidate are associated with a first control resource set.

For example, an SSS 1 is associated with the first control resource set, and an SSS 2 is associated with the first control resource set. A PDCCH candidate associated with the SSS 1 includes a PDCCH candidate corresponding to AL8, and a PDCCH candidate associated with the SSS 2 includes a PDCCH candidate corresponding to AL 16.

For another example, an SSS 1 is associated with the first control resource set, and a PDCCH candidate associated with the SSS 1 includes a PDCCH candidate corresponding to AL8 and a PDCCH candidate corresponding to AL16.

Condition 2: The first control resource set occupies one OFDM symbol in time domain.

Condition 3: A start index of a CCE included in the first PDCCH candidate is the same as a start index of a CCE included in the second PDCCH candidate. The first PDCCH candidate corresponds to a first aggregation level. The first PDCCH includes a plurality of CCEs. The second PDCCH candidate corresponds to a second aggregation level. The second PDCCH includes a plurality of CCEs.

For example, the first aggregation level corresponding to the first PDCCH candidate is 8, and the second aggregation level corresponding to the second PDCCH candidate is 16, or the first aggregation level corresponding to the first PDCCH candidate is 16, and the second aggregation level corresponding to the second PDCCH candidate is 8.

For example, a start index of a CCE included in the PDCCH candidate corresponding to AL8 is the same as a start index of a CCE included in the PDCCH candidate corresponding to AL16. Specifically, the start index of the CCE included in the PDCCH candidate corresponding to AL8 is 0, and the start index of the CCE included in the PDCCH candidate corresponding to AL16 is 0.

Condition 4: An REG included in the first control resource set is mapped to a CCE in a non-interleaved manner.

Alternatively, it is described as that mapping of the plurality of CCEs included in the first PDCCH is non-interleaved mapping. Mapping of the plurality of CCEs included in the second PDCCH is non-interleaved mapping. Alternatively, if an interleaved manner configured for the first control resource set is the non-interleaved manner, positions of REGs corresponding to CCEs of each PDCCH candidate associated with the first control resource set are consecutive in frequency domain.

It can be learned from the foregoing four conditions that time-frequency resources of the first PDCCH candidate partially overlap time-domain resources of the second PDCCH candidate, and a partially overlapping resource is a time-frequency resource of a PDCCH candidate corresponding to a lower aggregation level between the first aggregation level and the second aggregation level.

The following describes examples of several scenarios in which the foregoing problem may occur in embodiments of this application.

Scenario 1: Only one of the first PDCCH candidate and the second PDCCH candidate is associated with another PDCCH candidate.

For example, the first PDCCH candidate is associated with a third PDCCH candidate, and there is no PDCCH candidate associated with the second PDCCH candidate. The first PDCCH candidate and the third PDCCH candidate are used to carry same DCI. The third PDCCH candidate is associated with a second control resource set. The first control resource set is different from the second control resource set.

Optionally, PDCCH monitoring occasions corresponding to the first PDCCH candidate and the third PDCCH candidate are different. For example, start OFDM positions of the PDCCH monitoring occasions are different, or end OFDM symbol positions are different.

Optionally, search space sets corresponding to the first PDCCH candidate and the third PDCCH candidate are different.

Optionally, search space sets corresponding to the second PDCCH candidate and the third PDCCH candidate are different.

Optionally, CORESETs corresponding to the first PDCCH candidate and the third PDCCH candidate are different.

Alternatively, the second PDCCH candidate is associated with a fourth PDCCH candidate, and there is no PDCCH candidate associated with the first PDCCH candidate. The second PDCCH candidate and the fourth PDCCH candidate are used to carry same DCI. The fourth PDCCH candidate is associated with a third control resource set. The first control resource set is different from the second control resource set.

Optionally, PDCCH monitoring occasions corresponding to the second PDCCH candidate and the fourth PDCCH candidate are different. For example, start OFDM positions of the PDCCH monitoring occasions are different, or end OFDM symbol positions are different.

Optionally, search space sets corresponding to the second PDCCH candidate and the fourth PDCCH candidate are different.

Optionally, search space sets corresponding to the first PDCCH candidate and the fourth PDCCH candidate are different.

Optionally, CORESETs corresponding to the second PDCCH candidate and the fourth PDCCH candidate are different.

For example, the PDCCH candidates corresponding to the SSS 1 include the PDCCH candidate corresponding to AL8. The PDCCH candidates corresponding to the SSS 2 include the PDCCH candidate corresponding to AL16. The start index of the CCE included in the PDCCH candidate corresponding to AL8 is the same as the start index of the CCE included in the PDCCH candidate corresponding to AL16. The SSS 1 is associated with a CORESET 1. The SSS 2 is associated with the CORESET 1. The CORESET 1 occupies one OFDM symbol in time domain. An REG included in the CORESET 1 is mapped to a CCE in the non-interleaved manner. Time-frequency resource positions respectively corresponding to the PDCCH candidate that corresponds to AL8 and that is included in the PDCCH candidates corresponding to the SSS 1 and the PDCCH candidate that corresponds to AL16 and that is included in the PDCCH candidates corresponding to the SSS 2 are shown in FIG. 10A.

In a possible scenario, an SSS 3 is associated with a CORESET 2. The CORESET 1 is different from the CORESET 2. PDCCH candidates corresponding to the SSS 3 include the PDCCH candidate corresponding to AL8. The SSS 1 is associated with the SSS 3. The PDCCH candidate that corresponds to AL8 and that is included in the PDCCH candidates corresponding to the SSS 1 is associated with the PDCCH candidate that corresponds to AL8 and that is included in the PDCCH candidates corresponding to the SSS 3, and the SSS 2 is not associated with another SSS. The PDCCH candidates corresponding to the SSS 2 include a PDCCH candidate that is not associated with the PDCCH candidate corresponding to AL16. As shown in FIG. 10B, a right figure of FIG. 10B is a diagram of the time-frequency resource position of the PDCCH candidate that corresponds to AL8 and that is included in the PDCCH candidates corresponding to the SSS 3.

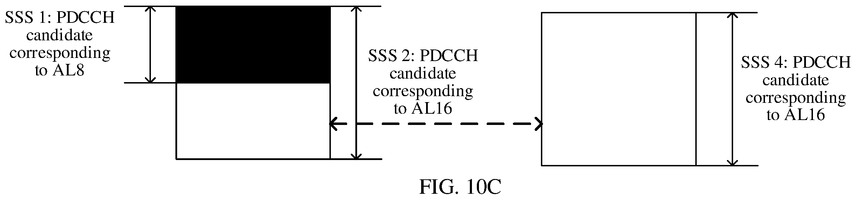

In another possible scenario, an SSS 4 is associated with a CORESET 3. The CORESET 1 is different from the CORESET 3. PDCCH candidates corresponding to the SSS 4 include the PDCCH candidate corresponding to AL16. The SSS 2 is associated with the SSS 4. The PDCCH candidate that corresponds to AL16 and that is included in the PDCCH candidates corresponding to the SSS 4 is associated with the PDCCH candidate that corresponds to AL16 and that is included in the PDCCH candidates corresponding to the SSS 2, and the SSS 1 is not associated with another SSS. The PDCCH candidates corresponding to the SSS 1 include a PDCCH candidate that is not associated with the PDCCH candidate corresponding to AL8. As shown in FIG. 10C, a right figure of FIG. 10C is a diagram of the time-frequency resource position of the PDCCH candidate that corresponds to AL16 and that is included in the PDCCH candidates corresponding to the SSS 4.

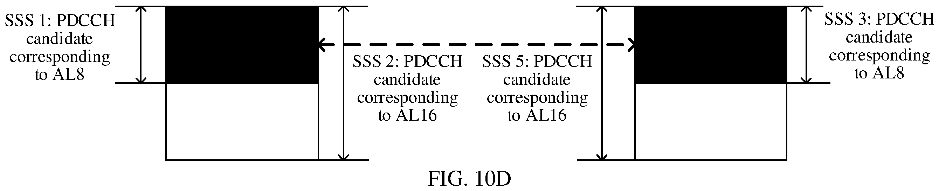

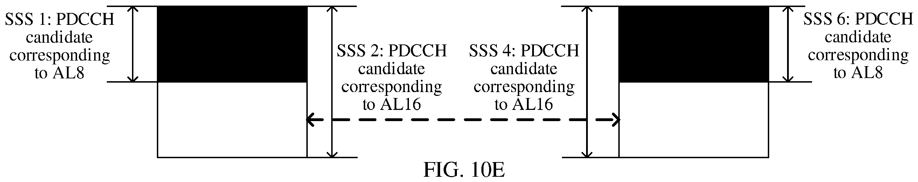

It should be noted that, whether there is a PDCCH candidate whose aggregation level is the same as that of the second PDCCH candidate and that satisfies the foregoing four conditions with the third PDCCH candidate is not limited in embodiments of this application. For example, based on FIG. 10B, an SSS 5 is associated with the CORESET 2. PDCCH candidates corresponding to the SSS 5 include the PDCCH candidate corresponding to AL16. The SSS 5 is not associated with the SSS 2, to be specific, the PDCCH candidate that corresponds to AL16 and that is included in the PDCCH candidates corresponding to the SSS 5 is not associated with the PDCCH candidate that corresponds to AL16 and that is included in the PDCCH candidates corresponding to the SSS 2. A right figure of FIG. 10D is a diagram of time-frequency resource positions respectively corresponding to the PDCCH candidate that corresponds to AL16 and that is included in the PDCCH candidates corresponding to the SSS 5 and the PDCCH candidate that corresponds to AL8 and that is included in the PDCCH candidates corresponding to the SSS 3. For another example, based on FIG. 10C, an SSS 6 is associated with the CORESET 3. PDCCH candidates corresponding to the SSS 6 include the PDCCH candidate corresponding to AL8. The SSS 6 is not associated with the SSS 2, to be specific, the PDCCH candidate that corresponds to AL8 and that is included in the PDCCH candidates corresponding to the SSS 1 is not associated with the PDCCH candidate that corresponds to AL8 and that is included in the PDCCH candidates corresponding to the SSS 6. A right figure of FIG. 10E is a diagram of time-frequency resource positions respectively corresponding to the PDCCH candidate that corresponds to AL8 and that is included in the PDCCH candidates corresponding to the SSS 6 and the PDCCH candidate that corresponds to AL16 and that is included in the PDCCH candidates corresponding to the SSS 4.

Scenario 2: The first PDCCH candidate and the second PDCCH candidate each are associated with another PDCCH candidate.

For example, the first PDCCH candidate is associated with a third PDCCH candidate, and the second PDCCH candidate is associated with a fourth PDCCH candidate. The first PDCCH candidate and the third PDCCH candidate are used to carry same DCI. The third PDCCH candidate is associated with a fourth control resource set. The second PDCCH candidate and the fourth PDCCH candidate are used to carry same DCI. The fourth PDCCH candidate is associated with the fourth control resource set or a fifth control resource set.

Optionally, PDCCH monitoring occasions corresponding to the first PDCCH candidate and the third PDCCH candidate are different, or PDCCH monitoring occasions corresponding to the second PDCCH candidate and the fourth PDCCH candidate are different. For example, start OFDM positions of the PDCCH monitoring occasions are different, or end OFDM symbol positions are different.

Optionally, search space sets corresponding to the first PDCCH candidate and the third PDCCH candidate are different. Search space sets corresponding to the second PDCCH candidate and the fourth PDCCH candidate are different.

Optionally, search space sets corresponding to the second PDCCH candidate and the third PDCCH candidate are different.

Optionally, CORESETs corresponding to the first PDCCH candidate and the third PDCCH candidate are different. CORESETs corresponding to the second PDCCH candidate and the fourth PDCCH candidate are different.

For example, the PDCCH candidates corresponding to the SSS 1 include the PDCCH candidate corresponding to AL8. The PDCCH candidates corresponding to the SSS 2 include the PDCCH candidate corresponding to AL16. The start index of the CCE included in the PDCCH candidate corresponding to AL8 is the same as the start index of the CCE included in the PDCCH candidate corresponding to AL16. The SSS 1 is associated with the CORESET 1. The SSS 2 is associated with the CORESET 1. The CORESET 1 occupies one OFDM symbol in time domain. An REG included in the CORESET 1 is mapped to a CCE in the non-interleaved manner. Time-frequency resource positions respectively corresponding to the PDCCH candidate that corresponds to AL8 and that is included in the PDCCH candidates corresponding to the SSS 1 and the PDCCH candidate that corresponds to AL16 and that is included in the PDCCH candidates corresponding to the SSS 2 are shown in FIG. 10A.

In a possible scenario, an SSS 3 is associated with a CORESET 2. The CORESET 1 is different from the CORESET 2. The PDCCH candidates corresponding to the SSS 3 include the PDCCH candidate (corresponding to the third PDCCH candidate) corresponding to AL8. The SSS 1 is associated with the SSS 3. The PDCCH candidate (corresponding to the first PDCCH) that corresponds to AL8 and that is included in the PDCCH candidates corresponding to the SSS 1 is associated with the PDCCH candidate (corresponding to the third PDCCH) that corresponds to AL8 and that is included in the PDCCH candidates corresponding to the SSS 3.

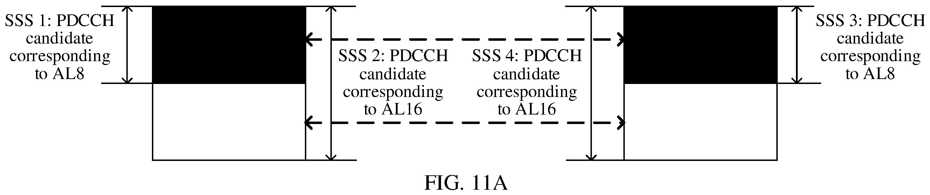

As shown in FIG. 11A, an SSS 4 is associated with the CORESET 2. PDCCH candidates corresponding to the SSS 4 include the PDCCH candidate (corresponding to the fourth PDCCH candidate) corresponding to AL16. The SSS 2 is associated with the SSS 4. The PDCCH candidate (corresponding to the fourth PDCCH candidate) that corresponds to AL16 and that is included in the PDCCH candidates corresponding to the SSS 4 is associated with the PDCCH candidate (corresponding to the second PDCCH candidate) that corresponds to AL16 and that is included in the PDCCH candidates corresponding to the SSS 2.

In a possible scenario, the SSS 3 is associated with the CORESET 2. The CORESET 1 is different from the CORESET 2. The PDCCH candidates corresponding to the SSS 3 include the PDCCH candidate (corresponding to the third PDCCH candidate) corresponding to AL8. The SSS 1 is associated with the SSS 3. The PDCCH candidate (corresponding to the first PDCCH) that corresponds to AL8 and that is included in the PDCCH candidates corresponding to the SSS 1 is associated with the PDCCH candidate (corresponding to the third PDCCH) that corresponds to AL8 and that is included in the PDCCH candidates corresponding to the SSS 3.

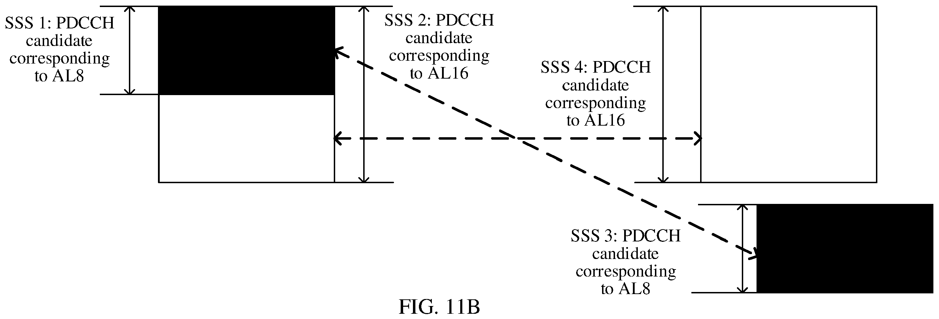

As shown in FIG. 11B, the SSS 4 is associated with a CORESET 3. The CORESET 1, the CORESET 2, and the CORESET 3 are different from each other. The PDCCH candidates corresponding to the SSS 4 include the PDCCH candidate (corresponding to the fourth PDCCH candidate) corresponding to AL16. The SSS 2 is associated with the SSS 4. The PDCCH candidate (corresponding to the fourth PDCCH candidate) that corresponds to AL16 and that is included in the PDCCH candidates corresponding to the SSS 4 is associated with the PDCCH candidate (corresponding to the second PDCCH candidate) that corresponds to AL16 and that is included in the PDCCH candidates corresponding to the SSS 2.

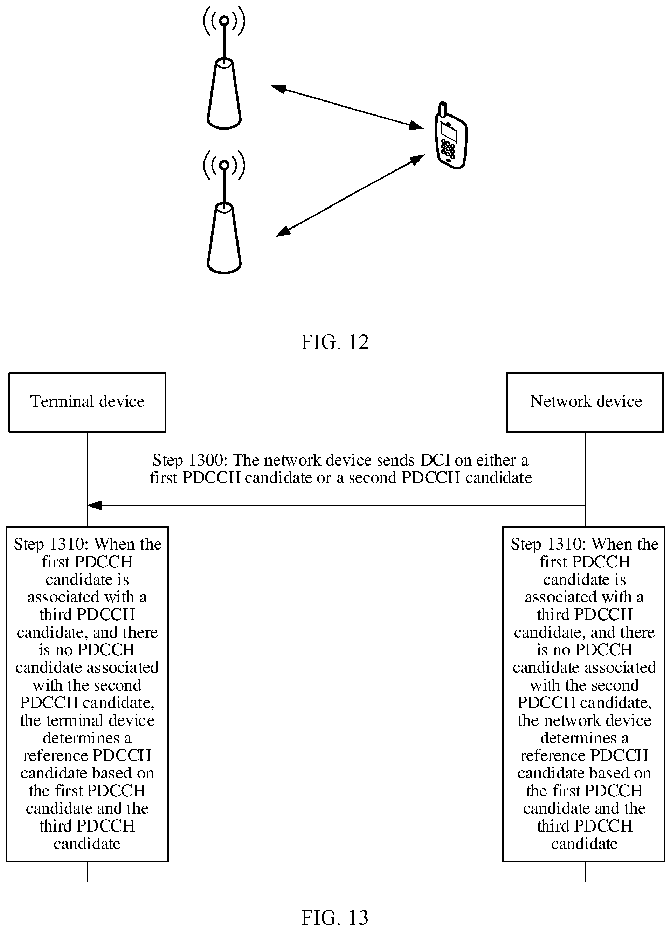

FIG. 12 is a diagram of an application scenario according to an embodiment of this application. Embodiments of this application are applicable to both a homogeneous network scenario and a heterogeneous network scenario, and a network device is not limited. Coordinated multipoint transmission may be performed between a macro base station and a macro base station, between a micro base station and a micro base station, or between a macro base station and a micro base station. Embodiments of this application are applicable to a frequency division duplexing (frequency division duplexing, FDD) system or a time division duplexing (time division duplexing, TDD) system.

Embodiments of this application are applicable to a single-TRP (Single-TRP) scenario or a multi-TRP (Multi-TRP) scenario, and any scenario derived from the single-TRP scenario or the multi-TRP scenario.

As shown in FIG. 13, for the foregoing scenario 1, to resolve a problem that scheduling information determined by a terminal device may be inconsistent with scheduling information determined by a network device in some scenarios, this application provides a communication method.

Step 1300: A network device sends DCI on either a first PDCCH candidate or a second PDCCH candidate. Correspondingly, a terminal device detects the DCI on at least one of the first PDCCH candidate and the second PDCCH candidate.

The first PDCCH candidate and the second PDCCH candidate satisfy the foregoing four conditions, and details are not described herein.

The foregoing step 1300 may include the following possible scenarios:

Example 1: The network device sends the DCI on the first PDCCH candidate. Correspondingly, the terminal device detects the DCI on the at least one of the first PDCCH candidate and the second PDCCH candidate, in other words, the terminal device may detect the DCI on the first PDCCH candidate, or detect the DCI on the second PDCCH candidate, or the terminal device may detect the DCI on both the first PDCCH candidate and the second PDCCH candidate.

Example 2: The network device sends the DCI on the second PDCCH candidate. Correspondingly, the terminal device detects the DCI on the at least one of the first PDCCH candidate and the second PDCCH candidate, in other words, the terminal device may detect the DCI on the first PDCCH candidate, or detect the DCI on the second PDCCH candidate, or the terminal device may detect the DCI on both the first PDCCH candidate and the second PDCCH candidate.

Step 1310: When the first PDCCH candidate is associated with a third PDCCH candidate, and there is no PDCCH candidate associated with the second PDCCH candidate, the terminal device determines a reference PDCCH candidate based on the first PDCCH candidate and the third PDCCH candidate, and the network device determines a reference PDCCH candidate based on the first PDCCH candidate and the third PDCCH candidate.

The reference PDCCH candidate is used to determine at least one of time-frequency-space domain transmission resource information indicated by the DCI, uplink transmit power information indicated by the DCI, or uplink feedback information corresponding to the DCI.

That the terminal device and the network device may determine the reference PDCCH candidate based on the first PDCCH candidate and the third PDCCH candidate may include at least one of the following:

A first reference PDCCH candidate is a PDCCH candidate with a later end OFDM symbol between the first PDCCH candidate and the third PDCCH candidate.

The terminal device and the network device may determine, based on the first reference PDCCH candidate, at least one of the following time-frequency-space domain transmission resource information indicated by the DCI:

For example, the terminal device and the network device may determine, based on whether a time domain position of the first reference PDCCH candidate is located in first three OFDM symbols in one slot, a transmission delay of scheduling by using the DCI, determine, based on the time domain position of the first reference PDCCH candidate, a position that is of an OFDM symbol whose sending is canceled and that is indicated by the DCI, determine, based on the time domain position of the first reference PDCCH candidate, cancellation time that is of an SPS-based PDSCH and that is indicated by the DCI, determine, based on the first reference PDCCH candidate, reception preparation time corresponding to a PDSCH or an aperiodic CSI-RS scheduled by using the DCI in cross-carrier scheduling, determine, based on the time domain position of the first reference PDCCH candidate, a start position of the PDSCH or the aperiodic CSI-RS scheduled by using the DCI, determine, based on the time domain position of the first reference PDCCH candidate, whether a preset receive beam is used in the PDSCH or the aperiodic CSI-RS scheduled by using the DCI, determine, based on the time domain position of the first reference PDCCH candidate, whether the PDSCH or a PUSCH scheduled by using the DCI satisfies a processing capability of the terminal device, and determine, based on the time domain position of the first reference PDCCH candidate, preparation time of the PUSCH or an SRS scheduled by using the DCI.

The terminal device and the network device may determine, based on the first reference PDCCH candidate, at least one of the following uplink transmit power information indicated by the DCI:

For example, the terminal device and the network device may determine, based on the first reference PDCCH candidate, whether the DCI is located in an effective time window of TPC.

The terminal device determines, based on the first reference PDCCH candidate, at least one of the following uplink feedback information corresponding to the DCI:

For example, when channel state information CSI carried in the DCI is triggered, the terminal device and the network device may determine, based on the first reference PDCCH candidate, a position relationship between a last OFDM symbol of a PDCCH monitoring time period corresponding to the DCI and a last OFDM symbol of a PDCCH monitoring time period corresponding to a BWP switching indication, determine, based on the time domain position of the first reference PDCCH candidate, a time domain position of a HARQ-ACK feedback corresponding to the DCI, determine, based on the time domain position of the first reference PDCCH candidate, whether a PHR corresponding to the DCI is a virtual PHR or a real PHR, determine, based on the time domain position of the first reference PDCCH candidate, occupation time of a CPU corresponding to aperiodic CSI triggered by the DCI, and determine, based on the time domain position of the first reference PDCCH candidate, calculation time of CSI scheduled by using the DCI.

A second reference PDCCH candidate is a PDCCH candidate with an earlier start OFDM symbol between the first PDCCH candidate and the third PDCCH candidate.

The terminal device and the network device may determine, based on the second reference PDCCH candidate, at least one of the following time-frequency-space domain transmission resource information indicated by the DCI:

For example, the terminal device and the network device may determine, based on a time domain position of the second reference PDCCH candidate, a position that is of a preempted OFDM symbol and that is indicated by the DCI, determine, based on a position of a first OFDM symbol of the second reference PDCCH candidate, whether a CI in the DCI takes effect, and determine, based on the time domain position of the second reference PDCCH candidate, a latest SRS resource position corresponding to an SRI in the DCI.

The terminal device and the network device may determine, based on the second reference PDCCH candidate, at least one of the following uplink feedback information corresponding to the DCI:

For example, the terminal device and the network device may determine, based on the second reference PDCCH candidate, a position of a HARQ-ACK feedback bit corresponding to the DCI in a HARQ-ACK codebook, and determine, based on the second reference PDCCH candidate, a PUCCH resource carrying a HARQ-ACK feedback corresponding to the DCI.

A third reference PDCCH candidate is a PDCCH candidate corresponding to a symbol search space set with a smaller index between a search space set corresponding to the first PDCCH candidate and a search space set corresponding to the third PDCCH candidate. The search space set corresponding to the first PDCCH candidate is associated with the search space set corresponding to the third PDCCH candidate. The search space set corresponding to the first PDCCH candidate is different from the search space set corresponding to the third PDCCH candidate.

For example, the time-frequency-space domain transmission resource information that is indicated by the DCI and that is determined by the terminal device and the network device based on the third reference PDCCH candidate includes a PUCCH resource indicated by the DCI.

A fourth reference PDCCH candidate is a PDCCH candidate corresponding to a control resource set with a smaller index between a control resource set corresponding to the first PDCCH candidate and a control resource set corresponding to the third PDCCH candidate. The control resource set corresponding to the first PDCCH candidate is different from the control resource set corresponding to the third PDCCH candidate.

For example, the time-frequency-space domain transmission resource information that is indicated by the DCI and that is determined by the terminal device and the network device based on the fourth reference PDCCH candidate includes a preset QCL assumption of a PDSCH scheduled by using the DCI.

In addition, in some embodiments, the terminal device and the network device may further determine, based on the first PDCCH candidate, the second PDCCH candidate, and the third PDCCH candidate, a resource element RE unavailable for PDSCH transmission. For example, the RE unavailable for the PDSCH transmission includes an RE occupied by the first PDCCH candidate, an RE occupied by the second PDCCH candidate, and an RE occupied by the third PDCCH candidate. Therefore, rate matching is performed based on the RE corresponding to the first PDCCH candidate, the second PDCCH candidate, and the third PDCCH candidate as a whole, so that the terminal device and the network device can avoid inconsistent understanding of PDSCH resource mapping, to improve PDSCH receiving performance.

According to the embodiment shown in FIG. 13, both the terminal device and the network device determine the reference PDCCH candidate based on a pair of PDCCH candidates that have an association relationship, and determine scheduling information based on the reference PDCCH candidate, so that the terminal device and the network device can have consistent understanding of the reference PDCCH candidate, to ensure that the scheduling information determined by the terminal device is consistent with the scheduling information determined by the network device.

The following describes the foregoing embodiment by using examples with reference to FIG. 10A, FIG. 10B, and FIG. 10C.

Example 1: FIG. 10A and FIG. 10B are used as examples. The PDCCH candidate that corresponds to AL8 and that is included in the PDCCH candidates corresponding to the SSS 1 is denoted as a PDCCH candidate 1. The PDCCH candidate that corresponds to AL16 and that is included in the PDCCH candidates corresponding to the SSS 2 is denoted as a PDCCH candidate 2. The PDCCH candidate that corresponds to AL8 and that is included in the PDCCH candidates corresponding to the SSS 3 is denoted as a PDCCH candidate 3. The PDCCH 1 and the PDCCH 2 satisfy the foregoing four conditions. It is assumed that a start position of the PDCCH candidate 1 in time domain is earlier than that of the PDCCH candidate 3, and an end position of the PDCCH candidate 1 in time domain is also earlier than that of the PDCCH candidate 3.

When the terminal device detects the DCI on the PDCCH candidate 1 and/or the PDCCH candidate 2, the terminal device may determine at least one of the first reference PDCCH candidate, the second reference PDCCH candidate, the third reference PDCCH candidate, and the fourth reference PDCCH candidate, and determine corresponding scheduling information based on the corresponding reference PDCCH candidate.

The first reference PDCCH candidate is the PDCCH candidate 3. The PDCCH candidate 3 is a PDCCH candidate with a later end OFDM symbol between the PDCCH candidate 1 and the PDCCH candidate 3.

The terminal device may determine, based on the first reference PDCCH candidate, the time-frequency-space domain transmission resource information indicated by the DCI, the uplink transmit power information indicated by the DCI, and the uplink feedback information corresponding to the DCI. For specific content, refer to related content in the embodiment shown in FIG. 13. Details are not described again.

The second reference PDCCH candidate is the PDCCH candidate 1. The PDCCH candidate 1 is a PDCCH candidate with an earlier start OFDM symbol between the PDCCH candidate 1 and the PDCCH candidate 3.

The terminal device may determine, based on the second reference PDCCH candidate, the time-frequency-space domain transmission resource information indicated by the DCI and the uplink feedback information corresponding to the DCI. For specific content, refer to related content in the embodiment shown in FIG. 13. Details are not described again.

The third reference PDCCH candidate is the PDCCH candidate 1. The PDCCH candidate 1 is a PDCCH candidate corresponding to a symbol SSS with a smaller index between the SSS 1 corresponding to the PDCCH candidate 1 and the SSS 3 corresponding to the PDCCH candidate 3.

The terminal device may determine, based on the third reference PDCCH candidate, the time-frequency-space domain transmission resource information indicated by the DCI. For specific content, refer to related content in the embodiment shown in FIG. 13. Details are not described again.

The fourth reference PDCCH candidate is the PDCCH candidate 1. The PDCCH candidate 1 is a PDCCH candidate corresponding to a CORESET with a smaller index between the CORESET 1 corresponding to the PDCCH candidate 1 and the CORESET 2 corresponding to the PDCCH candidate 3.

The terminal device may determine, based on the fourth reference PDCCH candidate, the time-frequency-space domain transmission resource information indicated by the DCI. For specific content, refer to related content in the embodiment shown in FIG. 13. Details are not described again.

Similarly, when the network device sends the DCI to the terminal device on the PDCCH candidate 1 or the PDCCH candidate 2, the network device may determine the first reference PDCCH candidate, the second reference PDCCH candidate, the third reference PDCCH candidate, and the fourth reference PDCCH candidate, and determine corresponding scheduling information based on the corresponding reference PDCCH candidate. Therefore, by using the foregoing example 1, the scheduling information determined by the terminal device can be consistent with the scheduling information determined by the network device.

Example 2: FIG. 10A and FIG. 10C are used as examples. The PDCCH candidate that corresponds to AL8 and that is included in the PDCCH candidates corresponding to the SSS 1 is denoted as a PDCCH candidate 1. The PDCCH candidate that corresponds to AL16 and that is included in the PDCCH candidates corresponding to the SSS 2 is denoted as a PDCCH candidate 2. The PDCCH candidate that corresponds to AL16 and that is included in the PDCCH candidates corresponding to the SSS 4 is denoted as a PDCCH candidate 4. The PDCCH 1 and the PDCCH 2 satisfy the foregoing four conditions. It is assumed that a start position of the PDCCH candidate 2 in time domain is earlier than that of the PDCCH candidate 4, and an end position of the PDCCH candidate 2 in time domain is also earlier than that of the PDCCH candidate 4.

When the terminal device detects the DCI on the PDCCH candidate 1 and/or the PDCCH candidate 2, the terminal device may determine at least one of the first reference PDCCH candidate, the second reference PDCCH candidate, the third reference PDCCH candidate, and the fourth reference PDCCH candidate, and determine corresponding scheduling information based on the corresponding reference PDCCH candidate.

The first reference PDCCH candidate is the PDCCH candidate 4. The PDCCH candidate 4 is a PDCCH candidate with a later end OFDM symbol between the PDCCH candidate 2 and the PDCCH candidate 4.

The terminal device may determine, based on the first reference PDCCH candidate, the time-frequency-space domain transmission resource information indicated by the DCI, the uplink transmit power information indicated by the DCI, and the uplink feedback information corresponding to the DCI. For specific content, refer to related content in the embodiment shown in FIG. 13. Details are not described again.

The second reference PDCCH candidate is the PDCCH candidate 2. The PDCCH candidate 2 is a PDCCH candidate with an earlier start OFDM symbol between the PDCCH candidate 2 and the PDCCH candidate 4.

The terminal device may determine, based on the second reference PDCCH candidate, the time-frequency-space domain transmission resource information indicated by the DCI and the uplink feedback information corresponding to the DCI. For specific content, refer to related content in the embodiment shown in FIG. 13. Details are not described again.

The third reference PDCCH candidate is the PDCCH candidate 2. The PDCCH candidate 2 is a PDCCH candidate corresponding to a symbol SSS with a smaller index between the SSS 2 corresponding to the PDCCH candidate 2 and the SSS 4 corresponding to the PDCCH candidate 4.

The terminal device may determine, based on the third reference PDCCH candidate, the time-frequency-space domain transmission resource information indicated by the DCI. For specific content, refer to related content in the embodiment shown in FIG. 13. Details are not described again.

The fourth reference PDCCH candidate is the PDCCH candidate 2. The PDCCH candidate 2 is a PDCCH candidate corresponding to a CORESET with a smaller index between the CORESET 1 corresponding to the PDCCH candidate 2 and the CORESET 3 corresponding to the PDCCH candidate 4.

The terminal device may determine, based on the fourth reference PDCCH candidate, the time-frequency-space domain transmission resource information indicated by the DCI. For specific content, refer to related content in the embodiment shown in FIG. 13. Details are not described again.

Similarly, when the network device sends the DCI to the terminal device on the PDCCH candidate 1 or the PDCCH candidate 2, the network device may determine the first reference PDCCH candidate, the second reference PDCCH candidate, the third reference PDCCH candidate, and the fourth reference PDCCH candidate, and determine corresponding scheduling information based on the corresponding reference PDCCH candidate. Therefore, by using the foregoing example 1, the scheduling information determined by the terminal device can be consistent with the scheduling information determined by the network device.

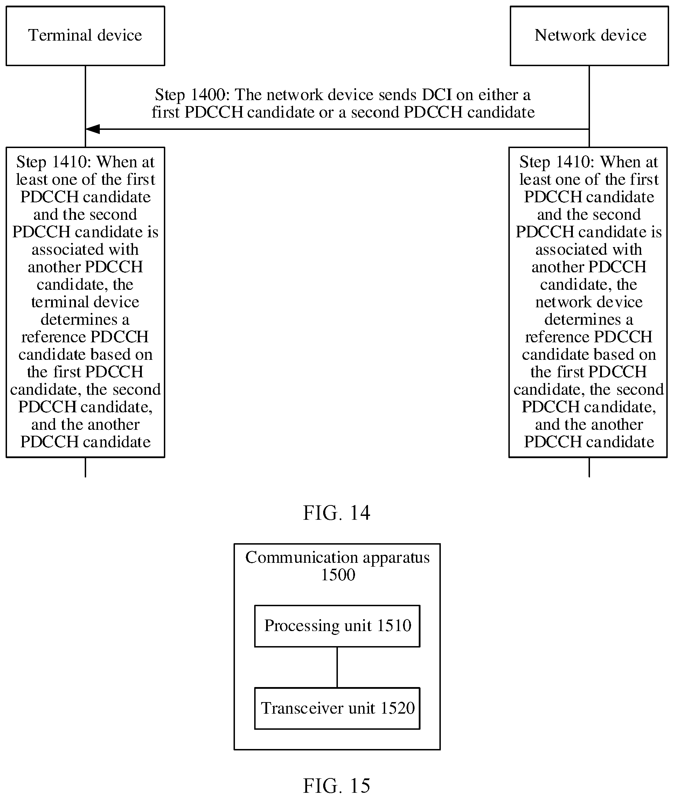

As shown in FIG. 14, for the foregoing scenario 1 and scenario 2, to resolve a problem that scheduling information determined by a terminal device may be inconsistent with scheduling information determined by a network device in some scenarios, this application provides a communication method.

Step 1400: A network device sends DCI on either a first PDCCH candidate or a second PDCCH candidate. Correspondingly, a terminal device detects the DCI on at least one of the first PDCCH candidate and the second PDCCH candidate.

For step 1400, refer to related content of step 1300, and details are not described again.

Step 1410: When at least one of the first PDCCH candidate and the second PDCCH candidate is associated with another PDCCH candidate, the terminal device determines a reference PDCCH candidate based on the first PDCCH candidate, the second PDCCH candidate, and the another PDCCH candidate, and the network device determines a reference PDCCH candidate based on the first PDCCH candidate, the second PDCCH candidate, and the another PDCCH candidate.

That at least one of the first PDCCH candidate and the second PDCCH candidate is associated with another PDCCH candidate may include the following implementations:

Manner 1: The first PDCCH candidate is associated with a third PDCCH candidate, and there is no PDCCH candidate associated with the second PDCCH candidate. The first PDCCH candidate and the third PDCCH candidate are used to carry same DCI. The third PDCCH candidate is associated with a second control resource set.

Manner 2: The second PDCCH candidate is associated with a fourth PDCCH candidate, and there is no PDCCH candidate associated with the first PDCCH candidate. The second PDCCH candidate and the fourth PDCCH candidate are used to carry same DCI. The fourth PDCCH candidate is associated with a third control resource set.

Manner 3: The first PDCCH candidate is associated with a third PDCCH candidate, and the second PDCCH candidate is associated with a fourth PDCCH candidate. The third PDCCH candidate is associated with a fourth control resource set. The second PDCCH candidate and the fourth PDCCH candidate are used to carry same DCI. The fourth PDCCH candidate is associated with the fourth control resource set or a fifth control resource set.

The foregoing manner 1 and manner 2 correspond to the scenario 1, and the manner 3 corresponds to the scenario 2. A quantity of other PDCCH candidates herein may be 1 (corresponding to the foregoing manner 1 and manner 2) or 2 (corresponding to the foregoing manner 3).

The reference PDCCH candidate is used to determine at least one of time-frequency-space domain transmission resource information indicated by the DCI, uplink transmit power information indicated by the DCI, or uplink feedback information corresponding to the DCI.

That the terminal device and the network device may determine the reference PDCCH candidate based on the first PDCCH candidate, the second PDCCH candidate, and the another PDCCH candidate may include the following several possible implementations:

A first reference PDCCH candidate is a PDCCH candidate with a latest end OFDM symbol among the first PDCCH candidate, the second PDCCH candidate, and the another PDCCH candidate.

The terminal device and the network device may determine, based on the first reference PDCCH candidate, at least one of the following time-frequency-space domain transmission resource information indicated by the DCI:

For example, the terminal device and the network device may determine, based on whether a time domain position of the first reference PDCCH candidate is located in first three OFDM symbols in one slot, a transmission delay of scheduling by using the DCI, determine, based on the time domain position of the first reference PDCCH candidate, a position that is of an OFDM symbol whose sending is canceled and that is indicated by the DCI, determine, based on the time domain position of the first reference PDCCH candidate, cancellation time that is of an SPS-based PDSCH and that is indicated by the DCI, determine, based on the first reference PDCCH candidate, reception preparation time corresponding to a PDSCH or an aperiodic CSI-RS scheduled by using the DCI in cross-carrier scheduling, determine, based on the time domain position of the first reference PDCCH candidate, a start position of the PDSCH or the aperiodic CSI-RS scheduled by using the DCI, determine, based on the time domain position of the first reference PDCCH candidate, whether a preset receive beam is used in the PDSCH or the aperiodic CSI-RS scheduled by using the DCI, determine, based on the time domain position of the first reference PDCCH candidate, whether the PDSCH or a PUSCH scheduled by using the DCI satisfies a processing capability of the terminal device, and determine, based on the time domain position of the first reference PDCCH candidate, preparation time of the PUSCH or an SRS scheduled by using the DCI.

The terminal device and the network device may determine, based on the first reference PDCCH candidate, at least one of the following uplink transmit power information indicated by the DCI:

For example, the terminal device and the network device may determine, based on the first reference PDCCH candidate, whether the DCI is located in an effective time window of TPC.

The terminal device determines, based on the first reference PDCCH candidate, at least one of the following uplink feedback information corresponding to the DCI:

For example, when channel state information CSI carried in the DCI is triggered, the terminal device and the network device may determine, based on the first reference PDCCH candidate, a position relationship between a last OFDM symbol of a PDCCH monitoring time period corresponding to the DCI and a last OFDM symbol of a PDCCH monitoring time period corresponding to a BWP switching indication, determine, based on the time domain position of the first reference PDCCH candidate, a time domain position of a HARQ-ACK feedback corresponding to the DCI, determine, based on the time domain position of the first reference PDCCH candidate, whether a PHR corresponding to the DCI is a virtual PHR or a real PHR, determine, based on the time domain position of the first reference PDCCH candidate, occupation time of a CPU corresponding to aperiodic CSI triggered by the DCI, and determine, based on the time domain position of the first reference PDCCH candidate, calculation time of CSI scheduled by using the DCI.

A second reference PDCCH candidate is a PDCCH candidate with an earliest start OFDM symbol among the first PDCCH candidate, the second PDCCH candidate, and the another PDCCH candidate.

The terminal device and the network device may determine, based on the second reference PDCCH candidate, at least one of the following time-frequency-space domain transmission resource information indicated by the DCI:

For example, the terminal device and the network device may determine, based on a time domain position of the second reference PDCCH candidate, a position that is of a preempted OFDM symbol and that is indicated by the DCI, determine, based on a position of a first OFDM symbol of the second reference PDCCH candidate, whether a CI in the DCI takes effect, and determine, based on the time domain position of the second reference PDCCH candidate, a latest SRS resource position corresponding to an SRI in the DCI.

The terminal device and the network device may determine, based on the second reference PDCCH candidate, at least one of the following uplink feedback information corresponding to the DCI:

For example, the terminal device and the network device may determine, based on the second reference PDCCH candidate, a position of a HARQ-ACK feedback bit corresponding to the DCI in a HARQ-ACK codebook, and determine, based on the second reference PDCCH candidate, a PUCCH resource carrying a HARQ-ACK feedback corresponding to the DCI.

A third reference PDCCH candidate is a PDCCH candidate corresponding to a search space set with a smallest index among search space sets respectively corresponding to the first PDCCH candidate, the second PDCCH candidate, and the another PDCCH candidate.

For example, the time-frequency-space domain transmission resource information that is indicated by the DCI and that is determined by the terminal device and the network device based on the third reference PDCCH candidate includes a PUCCH resource indicated by the DCI.

A fourth reference PDCCH candidate is a PDCCH candidate corresponding to a control resource set with a smallest index among control resource sets respectively corresponding to the first PDCCH candidate, the second PDCCH candidate, and the another PDCCH candidate.

For example, the time-frequency-space domain transmission resource information that is indicated by the DCI and that is determined by the terminal device and the network device based on the fourth reference PDCCH candidate includes a preset QCL assumption of a PDSCH scheduled by using the DCI.

In addition, in some embodiments, the terminal device and the network device may further determine, based on the first PDCCH candidate, the second PDCCH candidate, and the another PDCCH candidate, an RE unavailable for PDSCH transmission. For example, the resource element RE unavailable for the PDSCH transmission includes an RE occupied by the first PDCCH candidate, an RE occupied by the second PDCCH candidate, and an RE occupied by the another PDCCH candidate. Therefore, rate matching is performed based on the RE corresponding to the first PDCCH candidate, the second PDCCH candidate, and the another PDCCH candidate as a whole, so that the terminal device and the network device can avoid inconsistent understanding of PDSCH resource mapping, to improve PDSCH receiving performance.

According to the embodiment shown in FIG. 14, both the terminal device and the network device determine the reference PDCCH candidate based on at least one pair of PDCCH candidates that have an association relationship, and determine scheduling information based on the reference PDCCH candidate, so that the terminal device and the network device can have consistent understanding of the reference PDCCH candidate, to ensure that the scheduling information determined by the terminal device is consistent with the scheduling information determined by the network device.

The following describes the foregoing embodiment by using examples with reference to FIG. 10A, FIG. 11A, and FIG. 11B.

Example 2: FIG. 10A and FIG. 11A are used as examples. The PDCCH candidate that corresponds to AL8 and that is included in the PDCCH candidates corresponding to the SSS 1 is denoted as a PDCCH candidate 1. The PDCCH candidate that corresponds to AL16 and that is included in the PDCCH candidates corresponding to the SSS 2 is denoted as a PDCCH candidate 2. The PDCCH candidate that corresponds to AL8 and that is included in the PDCCH candidates corresponding to the SSS 3 is denoted as a PDCCH candidate 3. The PDCCH candidate that corresponds to AL16 and that is included in the PDCCH candidates corresponding to the SSS 4 is denoted as a PDCCH candidate 4. The PDCCH 1 and the PDCCH 2 satisfy the foregoing four conditions.

It is assumed that a start position of the PDCCH candidate 1 in time domain is earlier than that of the PDCCH candidate 3, an end position of the PDCCH candidate 1 in time domain is also earlier than that of the PDCCH candidate 3, a start position of the PDCCH candidate 2 in time domain is earlier than that of the PDCCH candidate 4, and an end position of the PDCCH candidate 2 in time domain is also earlier than that of the PDCCH candidate 4. The start position of the PDCCH candidate 1 in time domain is the same as the start position of the PDCCH candidate 2 in time domain, and the end position of the PDCCH candidate 1 in time domain is also the same as the end position of the PDCCH candidate 2 in time domain. The start position of the PDCCH candidate 3 in time domain is the same as the start position of the PDCCH candidate 4 in time domain, and the end position of the PDCCH candidate 3 in time domain is also the same as the end position of the PDCCH candidate 4 in time domain.

When the terminal device detects the DCI on the PDCCH candidate 1 and/or the PDCCH candidate 2, the terminal device may determine at least one of the first reference PDCCH candidate, the second reference PDCCH candidate, the third reference PDCCH candidate, and the fourth reference PDCCH candidate, and determine corresponding scheduling information based on the corresponding reference PDCCH candidate.

The first reference PDCCH candidate is the PDCCH candidate 3 or the PDCCH candidate 4. The PDCCH candidate 3 and the PDCCH candidate 4 are PDCCH candidates with latest end OFDM symbols between the PDCCH candidate 1, the PDCCH candidate 2, the PDCCH candidate 3, and the PDCCH candidate 4.

The terminal device may determine, based on the first reference PDCCH candidate, the time-frequency-space domain transmission resource information indicated by the DCI, the uplink transmit power information indicated by the DCI, and the uplink feedback information corresponding to the DCI. For specific content, refer to related content in the embodiment shown in FIG. 14. Details are not described again.

The second reference PDCCH candidate is the PDCCH candidate 1 or the PDCCH candidate 2. The PDCCH candidate 1 and the PDCCH candidate 2 are PDCCH candidates with earlier start OFDM symbols between the PDCCH candidate 1, the PDCCH candidate 2, the PDCCH candidate 3, and the PDCCH candidate 4.

The terminal device may determine, based on the second reference PDCCH candidate, the time-frequency-space domain transmission resource information indicated by the DCI and the uplink feedback information corresponding to the DCI. For specific content, refer to related content in the embodiment shown in FIG. 14. Details are not described again.

The third reference PDCCH candidate is the PDCCH candidate 1. The PDCCH candidate 1 is a PDCCH candidate corresponding to a symbol SSS with a smaller index between the SSS 1 corresponding to the PDCCH candidate 1, the SSS 2 corresponding to the PDCCH candidate 2, the SSS 3 corresponding to the PDCCH candidate 3, and the SSS 4 corresponding to the PDCCH candidate 4.

The terminal device may determine, based on the third reference PDCCH candidate, the time-frequency-space domain transmission resource information indicated by the DCI. For specific content, refer to related content in the embodiment shown in FIG. 14. Details are not described again.

The fourth reference PDCCH candidate is the PDCCH candidate 1 or the PDCCH candidate 2. The PDCCH candidate 1 and the PDCCH candidate 2 are PDCCH candidates corresponding to CORESETs with smaller indexes between the CORESET 1 corresponding to the PDCCH candidate 1, the CORESET 1 corresponding to the PDCCH candidate 2, the CORESET 2 corresponding to the PDCCH candidate 3, and the CORESET 3 corresponding to the PDCCH candidate 3.

The terminal device may determine, based on the fourth reference PDCCH candidate, the time-frequency-space domain transmission resource information indicated by the DCI. For specific content, refer to related content in the embodiment shown in FIG. 14. Details are not described again.

Similarly, when the network device sends the DCI to the terminal device on the PDCCH candidate 1 or the PDCCH candidate 2, the network device may determine the first reference PDCCH candidate, the second reference PDCCH candidate, the third reference PDCCH candidate, and the fourth reference PDCCH candidate, and determine corresponding scheduling information based on the corresponding reference PDCCH candidate. Therefore, by using the foregoing example 1, the scheduling information determined by the terminal device can be consistent with the scheduling information determined by the network device.

Example 2: FIG. 10A and FIG. 11B are used as examples. The PDCCH candidate that corresponds to AL8 and that is included in the PDCCH candidates corresponding to the SSS 1 is denoted as a PDCCH candidate 1. The PDCCH candidate that corresponds to AL16 and that is included in the PDCCH candidates corresponding to the SSS 2 is denoted as a PDCCH candidate 2. The PDCCH candidate that corresponds to AL8 and that is included in the PDCCH candidates corresponding to the SSS 3 is denoted as a PDCCH candidate 3. The PDCCH candidate that corresponds to AL16 and that is included in the PDCCH candidates corresponding to the SSS 4 is denoted as a PDCCH candidate 4. The PDCCH 1 and the PDCCH 2 satisfy the foregoing four conditions.

It is assumed that a start position of the PDCCH candidate 1 in time domain is earlier than that of the PDCCH candidate 3, an end position of the PDCCH candidate 1 in time domain is also earlier than that of the PDCCH candidate 3, a start position of the PDCCH candidate 2 in time domain is earlier than that of the PDCCH candidate 4, an end position of the PDCCH candidate 2 in time domain is also earlier than that of the PDCCH candidate 4, and an end position of the PDCCH candidate 4 in time domain is also earlier than that of the PDCCH candidate 3. The start position of the PDCCH candidate 1 in time domain is the same as the start position of the PDCCH candidate 2 in time domain, and the end position of the PDCCH candidate 1 in time domain is also the same as the end position of the PDCCH candidate 2 in time domain.

When the terminal device detects the DCI on the PDCCH candidate 1 and/or the PDCCH candidate 2, the terminal device may determine at least one of the first reference PDCCH candidate, the second reference PDCCH candidate, the third reference PDCCH candidate, and the fourth reference PDCCH candidate, and determine corresponding scheduling information based on the corresponding reference PDCCH candidate.

The first reference PDCCH candidate is the PDCCH candidate 3. The PDCCH candidate 3 is a PDCCH candidate with a latest end OFDM symbol among the PDCCH candidate 1, the PDCCH candidate 2, the PDCCH candidate 3, and the PDCCH candidate 4.

The terminal device may determine, based on the first reference PDCCH candidate, the time-frequency-space domain transmission resource information indicated by the DCI, the uplink transmit power information indicated by the DCI, and the uplink feedback information corresponding to the DCI. For specific content, refer to related content in the embodiment shown in FIG. 14. Details are not described again.

The second reference PDCCH candidate is the PDCCH candidate 1 or the PDCCH candidate 2. The PDCCH candidate 1 and the PDCCH candidate 2 are PDCCH candidates with earlier start OFDM symbols between the PDCCH candidate 1, the PDCCH candidate 2, the PDCCH candidate 3, and the PDCCH candidate 4.

The terminal device may determine, based on the second reference PDCCH candidate, the time-frequency-space domain transmission resource information indicated by the DCI and the uplink feedback information corresponding to the DCI. For specific content, refer to related content in the embodiment shown in FIG. 14. Details are not described again.

The third reference PDCCH candidate is the PDCCH candidate 1. The PDCCH candidate 1 is a PDCCH candidate corresponding to a symbol SSS with a smaller index between the SSS 1 corresponding to the PDCCH candidate 1, the SSS 2 corresponding to the PDCCH candidate 2, the SSS 3 corresponding to the PDCCH candidate 3, and the SSS 4 corresponding to the PDCCH candidate 4.

The terminal device may determine, based on the third reference PDCCH candidate, the time-frequency-space domain transmission resource information indicated by the DCI. For specific content, refer to related content in the embodiment shown in FIG. 14. Details are not described again.

The fourth reference PDCCH candidate is the PDCCH candidate 1 or the PDCCH candidate 2. The PDCCH candidate 1 and the PDCCH candidate 2 are PDCCH candidates corresponding to CORESETs with smaller indexes between the CORESET 1 corresponding to the PDCCH candidate 1, the CORESET 1 corresponding to the PDCCH candidate 2, the CORESET 2 corresponding to the PDCCH candidate 3, and the CORESET 3 corresponding to the PDCCH candidate 3.

The terminal device may determine, based on the fourth reference PDCCH candidate, the time-frequency-space domain transmission resource information indicated by the DCI. For specific content, refer to related content in the embodiment shown in FIG. 14. Details are not described again.

Similarly, when the network device sends the DCI to the terminal device on the PDCCH candidate 1 or the PDCCH candidate 2, the network device may determine the first reference PDCCH candidate, the second reference PDCCH candidate, the third reference PDCCH candidate, and the fourth reference PDCCH candidate, and determine corresponding scheduling information based on the corresponding reference PDCCH candidate. Therefore, by using the foregoing example 1, the scheduling information determined by the terminal device can be consistent with the scheduling information determined by the network device.

It may be understood that, to implement the functions in the foregoing embodiments, the network device and the terminal device include corresponding hardware structures and/or software modules for performing the functions. A person skilled in the art should be easily aware that, in this application, the units and steps in the methods in the examples described with reference to embodiments disclosed in this application can be implemented by hardware or a combination of hardware and computer software. Whether a function is performed by hardware or hardware driven by computer software depends on particular application scenarios and design constraints of the technical solutions.

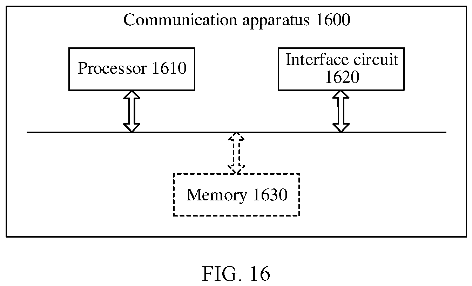

FIG. 15 and FIG. 16 are diagrams of structures of possible communication apparatuses according to embodiments of this application. The communication apparatus may be configured to implement functions of a terminal device or a network device in the foregoing method embodiments. Therefore, beneficial effects of the foregoing method embodiments can also be implemented. In embodiments of this application, the communication apparatus may be the terminal device 130 or the terminal device 140 shown in FIG. 1, may be the access network device 120 shown in FIG. 1, or may be a module (for example, a chip) used in the terminal device or the network device.

As shown in FIG. 15, the communication apparatus 1500 includes a processing unit 1510 and a transceiver unit 1520. The communication apparatus 1500 is configured to implement the functions of the terminal device or the network device in the method embodiments shown in FIG. 13 and FIG. 14.

When the communication apparatus 1500 is configured to implement the function of the terminal device in the method embodiment shown in FIG. 13, the processing unit 1510 invokes the transceiver unit 1520 to detect DCI on at least one of a first PDCCH candidate and a second PDCCH candidate. The first PDCCH candidate corresponds to a first aggregation level. The first PDCCH candidate includes a plurality of CCEs. The second PDCCH candidate corresponds to a second aggregation level. The second PDCCH candidate includes a plurality of CCEs. A start index of the CCE included in the first PDCCH candidate is the same as a start index of the CCE included in the second PDCCH candidate. The first PDCCH candidate and the second PDCCH candidate are associated with a first control resource set. The first control resource set occupies one OFDM symbol in time domain. Mapping of the plurality of CCEs included in the first PDCCH candidate is non-interleaved mapping. Mapping of the plurality of CCEs included in the second PDCCH candidate is non-interleaved mapping. When the first PDCCH candidate is associated with a third PDCCH candidate, and there is no PDCCH candidate associated with the second PDCCH candidate, the terminal device determines a reference PDCCH candidate based on the first PDCCH candidate and the third PDCCH candidate. The reference PDCCH candidate is used to determine at least one of time-frequency-space domain transmission resource information indicated by the DCI, uplink transmit power information indicated by the DCI, or uplink feedback information corresponding to the DCI.

When the communication apparatus 1500 is configured to implement the function of the network device in the method embodiment shown in FIG. 13,

the transceiver unit 1520 is configured to send DCI on either a first PDCCH candidate or a second PDCCH candidate. The first PDCCH candidate corresponds to a first aggregation level. The first PDCCH candidate includes a plurality of CCEs. The second PDCCH candidate corresponds to a second aggregation level. The second PDCCH candidate includes a plurality of CCEs. A start index of the CCE included in the first PDCCH candidate is the same as a start index of the CCE included in the second PDCCH candidate. The first PDCCH candidate and the second PDCCH candidate are associated with a first control resource set. The first control resource set occupies one OFDM symbol in time domain. Mapping of the plurality of CCEs included in the first PDCCH candidate is non-interleaved mapping. Mapping of the plurality of CCEs included in the second PDCCH candidate is non-interleaved mapping.

The processing unit 1510 is configured to: when the first PDCCH candidate is associated with a third PDCCH candidate, and there is no PDCCH candidate associated with the second PDCCH candidate, determine, by the terminal device, a reference PDCCH candidate based on the first PDCCH candidate and the third PDCCH candidate. The reference PDCCH candidate is used to determine at least one of time-frequency-space domain transmission resource information indicated by the DCI, uplink transmit power information indicated by the DCI, or uplink feedback information corresponding to the DCI.

For more detailed descriptions of the processing unit 1510 and the transceiver unit 1520, directly refer to the related descriptions in the method embodiment shown in FIG. 13. Details are not described herein.

When the communication apparatus 1500 is configured to implement the function of the terminal device in the method embodiment shown in FIG. 14, the processing unit 1510 invokes the transceiver unit 1520 to detect DCI on at least one of a first PDCCH candidate and a second PDCCH candidate. The first PDCCH candidate corresponds to a first aggregation level. The first PDCCH candidate includes a plurality of CCEs. The second PDCCH candidate corresponds to a second aggregation level. The second PDCCH candidate includes a plurality of CCEs. A start index of the CCE included in the first PDCCH candidate is the same as a start index of the CCE included in the second PDCCH candidate. The first PDCCH candidate and the second PDCCH candidate are associated with a first control resource set. The first control resource set occupies one OFDM symbol in time domain. Mapping of the plurality of CCEs included in the first PDCCH candidate is non-interleaved mapping. Mapping of the plurality of CCEs included in the second PDCCH candidate is non-interleaved mapping. When the at least one of the first PDCCH candidate and the second PDCCH candidate is associated with another PDCCH candidate, the communication apparatus 1500 determines a reference PDCCH candidate based on the first PDCCH candidate, the second PDCCH candidate, and the another PDCCH candidate. The reference PDCCH candidate is used to determine at least one of time-frequency-space domain transmission resource information indicated by the DCI, uplink transmit power information indicated by the DCI, or uplink feedback information corresponding to the DCI.

When the communication apparatus 1500 is configured to implement the function of the network device in the method embodiment shown in FIG. 14,

the transceiver unit 1520 is configured to send DCI on either a first PDCCH candidate or a second PDCCH candidate. The first PDCCH candidate corresponds to a first aggregation level. The first PDCCH candidate includes a plurality of CCEs. The second PDCCH candidate corresponds to a second aggregation level. The second PDCCH candidate includes a plurality of CCEs. A start index of the CCE included in the first PDCCH candidate is the same as a start index of the CCE included in the second PDCCH candidate. The first PDCCH candidate and the second PDCCH candidate are associated with a first control resource set. The first control resource set occupies one OFDM symbol in time domain. Mapping of the plurality of CCEs included in the first PDCCH candidate is non-interleaved mapping. Mapping of the plurality of CCEs included in the second PDCCH candidate is non-interleaved mapping.

The processing unit 1510 is configured to: when at least one of the first PDCCH candidate and the second PDCCH candidate is associated with another PDCCH candidate, determine a reference PDCCH candidate based on the first PDCCH candidate, the second PDCCH candidate, and the another PDCCH candidate. The reference PDCCH candidate is used to determine at least one of time-frequency-space domain transmission resource information indicated by the DCI, uplink transmit power information indicated by the DCI, or uplink feedback information corresponding to the DCI.

For more detailed descriptions of the processing unit 1510 and the transceiver unit 1520, directly refer to related descriptions in the method embodiment shown in FIG. 14. Details are not described herein.

As shown in FIG. 16, the communication apparatus 1600 includes a processor 1610 and an interface circuit 1620. The processor 1610 and the interface circuit 1620 are coupled to each other. It can be understood that the interface circuit 1620 may be a transceiver or an input/output interface. Optionally, the communication apparatus 1600 may further include a memory 1630, configured to: store instructions executed by the processor 1610, store input data required by the processor 1610 to run the instructions, or store data generated after the processor 1610 runs the instructions.

When the communication apparatus 1600 is configured to implement the method shown in FIG. 13 or FIG. 14, the processor 1610 is configured to implement the functions of the processing unit 1510, and the interface circuit 1620 is configured to implement the functions of the transceiver unit 1520.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (Central Processing Unit, CPU), or may be another general-purpose processor, a digital signal processor (Digital Signal Processor, DSP), an applicationspecific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The steps in the methods in embodiments of this application may be implemented in a hardware manner, or may be implemented in a manner of executing software instructions by the processor. The software instructions may include a corresponding software module. The software module may be stored in a random access memory (Random Access Memory, RAM), a flash memory, a read-only memory (Read-Only Memory, ROM), a programmable ROM (Programmable ROM, PROM), an erasable PROM (Erasable PROM, EPROM), an electrically EPROM (Electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

A part or all of the foregoing embodiments may be implemented by using software, hardware, firmware, or any combination thereof. When the software is used for implementation, the part or all of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from one computer-readable storage medium to another computer-readable storage medium. For example, the computer programs or instructions may be transmitted from one website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solidstate drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, wherein the method comprises:

    detecting, by a terminal device, downlink control information DCI on at least one of a first physical downlink control channel PDCCH candidate and a second PDCCH candidate, wherein
    the first PDCCH candidate corresponds to a first aggregation level, the first PDCCH candidate comprises a plurality of control channel elements CCEs, the second PDCCH candidate corresponds to a second aggregation level, the second PDCCH candidate comprises a plurality of CCEs, a start index of the CCE comprised in the first PDCCH candidate is the same as a start index of the CCE comprised in the second PDCCH candidate, the first PDCCH candidate and the second PDCCH candidate are associated with a first control resource set, the first control resource set occupies one orthogonal frequency division multiplexing OFDM symbol in time domain, mapping of the plurality of CCEs comprised in the first PDCCH candidate is non-interleaved mapping, and mapping of the plurality of CCEs comprised in the second PDCCH candidate is non-interleaved mapping; and when the at least one of the first PDCCH candidate and the second PDCCH candidate is associated with another PDCCH candidate, determining, by the terminal device, a reference PDCCH candidate based on the first PDCCH candidate, the second PDCCH candidate, and the another PDCCH candidate, wherein
    the reference PDCCH candidate is used to determine at least one of time-frequency-space domain transmission resource information indicated by the DCI, uplink transmit power information indicated by the DCI, or uplink feedback information corresponding to the DCI.

2. The method according to claim 1, wherein the first aggregation level is 8, and the second aggregation level is 16; or the first aggregation level is 16, and the second aggregation level is 8.

3. The method according to claim 1 or 2, wherein that the at least one of the first PDCCH candidate and the second PDCCH candidate is associated with another PDCCH candidate comprises:

the first PDCCH candidate is associated with a third PDCCH candidate, and there is no PDCCH candidate associated with the second PDCCH candidate, wherein the first PDCCH candidate and the third PDCCH candidate are used to carry same DCI, and the third PDCCH candidate is associated with a second control resource set;

the second PDCCH candidate is associated with a fourth PDCCH candidate, and there is no PDCCH candidate associated with the first PDCCH candidate, wherein the second PDCCH candidate and the fourth PDCCH candidate are used to carry same DCI, and the fourth PDCCH candidate is associated with a third control resource set; or

the first PDCCH candidate is associated with a third PDCCH candidate, and the second PDCCH candidate is associated with a fourth PDCCH candidate, wherein the first PDCCH candidate and the third PDCCH candidate are used to carry same DCI, the third PDCCH candidate is associated with a fourth control resource set, the second PDCCH candidate and the fourth PDCCH candidate are used to carry same DCI, and the fourth PDCCH candidate is associated with the fourth control resource set or a fifth control resource set.

4. The method according to any one of claims 1 to 3, wherein

the reference PDCCH candidate comprises one or more of a first reference PDCCH candidate, a second reference PDCCH candidate, a third reference PDCCH candidate, and a fourth reference PDCCH candidate; and

the first reference PDCCH candidate is a PDCCH candidate with a latest end OFDM symbol among the first PDCCH candidate, the second PDCCH candidate, and the another PDCCH candidate;

the second reference PDCCH candidate is a PDCCH candidate with an earliest start OFDM symbol among the first PDCCH candidate, the second PDCCH candidate, and the another PDCCH candidate;

the third reference PDCCH candidate is a PDCCH candidate corresponding to a search space set with a smallest index among search space sets respectively corresponding to the first PDCCH candidate, the second PDCCH candidate, and the another PDCCH candidate; or

the fourth reference PDCCH candidate is a PDCCH candidate corresponding to a control resource set with a smallest index among control resource sets respectively corresponding to the first PDCCH candidate, the second PDCCH candidate, and the another PDCCH candidate.

5. The method according to claim 4, wherein

the time-frequency-space domain transmission resource information that is indicated by the DCI and that is determined by the terminal device based on the second reference PDCCH candidate comprises at least one of a position that is of a preempted OFDM symbol and that is indicated by the DCI, whether a sending cancellation indication CI in the DCI takes effect, and a latest SRS resource position corresponding to a sounding reference signal SRS resource indication SRI in the DCI; and

the uplink feedback information that corresponds to the DCI and that is determined by the terminal device based on the second reference PDCCH candidate comprises at least one of a position of a hybrid automatic repeat request acknowledgment HARQ-ACK feedback bit corresponding to the DCI in a HARQ-ACK codebook, and a physical uplink control channel PUCCH resource carrying a HARQ-ACK feedback corresponding to the DCI.

6. The method according to claim 4, wherein

the time-frequency-space domain transmission resource information that is indicated by the DCI and that is determined by the terminal device based on the first reference PDCCH candidate comprises at least one of a transmission delay of scheduling by using the DCI, a position that is of an OFDM symbol whose sending is canceled and that is indicated by the DCI, cancellation time that is of a semi-persistent scheduling SPS-based physical downlink shared channel PDSCH and that is indicated by the DCI, reception preparation time corresponding to a PDSCH or an aperiodic channel state information reference signal CSI-RS scheduled by using the DCI in cross-carrier scheduling, a start position of the PDSCH or the aperiodic CSI-RS scheduled by using the DCI, whether a preset receive beam is used in the PDSCH or the aperiodic CSI-RS scheduled by using the DCI, whether the PDSCH or a physical uplink shared channel PUSCH scheduled by using the DCI satisfies a processing capability of the terminal device, and preparation time of the PUSCH or an SRS scheduled by using the DCI;

the uplink transmit power information that is indicated by the DCI and that is determined by the terminal device based on the first reference PDCCH candidate comprises: whether the DCI is located in an effective time window of transmit power control TPC; and

the uplink feedback information that corresponds to the DCI and that is determined by the terminal device based on the first reference PDCCH candidate comprises at least one of in a case that channel state information CSI carried in the DCI is triggered, a position relationship between a last OFDM symbol of a PDCCH monitoring time period corresponding to the DCI and a last OFDM symbol of a PDCCH monitoring time period corresponding to a bandwidth part BWP switching indication, a time domain position of a HARQ-ACK feedback corresponding to the DCI, whether a power headroom report PHR corresponding to the DCI is a virtual PHR or a real PHR, occupation time of a central processing unit CPU corresponding to aperiodic CSI triggered by the DCI, and calculation time of CSI scheduled by using the DCI.

7. The method according to claim 4, further comprising:
the time-frequency-space domain transmission resource information that is indicated by the DCI and that is determined by the terminal device based on the third reference PDCCH candidate comprises a PUCCH resource indicated by the DCI.

8. The method according to claim 4, further comprising:
the time-frequency-space domain transmission resource information that is indicated by the DCI and that is determined by the terminal device based on the fourth reference PDCCH candidate comprises a preset quasi co-location QCL assumption of a PDSCH scheduled by using the DCI.

9. The method according to any one of claims 1 to 8, further comprising:
determining, by the terminal device based on the first PDCCH candidate, the second PDCCH candidate, and the another PDCCH candidate, a resource element RE unavailable for PDSCH transmission.

10. The method according to claim 9, wherein the RE unavailable for the PDSCH transmission comprises an RE occupied by the first PDCCH candidate, an RE occupied by the second PDCCH candidate, and an RE occupied by the another PDCCH candidate.

11. A communication method, wherein the method comprises:

sending, by a network device, DCI on either a first PDCCH candidate or a second PDCCH candidate, wherein the first PDCCH candidate corresponds to a first aggregation level, the first PDCCH candidate comprises a plurality of CCEs, the second PDCCH candidate corresponds to a second aggregation level, the second PDCCH candidate comprises a plurality of CCEs, a start index of the CCE comprised in the first PDCCH candidate is the same as a start index of the CCE comprised in the second PDCCH candidate, the first PDCCH candidate and the second PDCCH candidate are associated with a first control resource set, the first control resource set occupies one OFDM symbol in time domain, mapping of the plurality of CCEs comprised in the first PDCCH candidate is non-interleaved mapping, and mapping of the plurality of CCEs comprised in the second PDCCH candidate is non-interleaved mapping; and

when at least one of the first PDCCH candidate and the second PDCCH candidate is associated with another PDCCH candidate, determining, by the network device, a reference PDCCH candidate based on the first PDCCH candidate, the second PDCCH candidate, and the another PDCCH candidate, wherein

the reference PDCCH candidate is used to determine at least one of time-frequency-space domain transmission resource information indicated by the DCI, uplink transmit power information indicated by the DCI, or uplink feedback information corresponding to the DCI.

12. The method according to claim 11, wherein the first aggregation level is 8, and the second aggregation level is 16; or the first aggregation level is 16, and the second aggregation level is 8.

13. The method according to claim 11 or 12, wherein that at least one of the first PDCCH candidate and the second PDCCH candidate is associated with another PDCCH candidate comprises:

the first PDCCH candidate is associated with a third PDCCH candidate, and there is no PDCCH candidate associated with the second PDCCH candidate, wherein the first PDCCH candidate and the third PDCCH candidate are used to carry same DCI, and the third PDCCH candidate is associated with a second control resource set;
the second PDCCH candidate is associated with a fourth PDCCH candidate, and there is no PDCCH candidate associated with the first PDCCH candidate, wherein the second PDCCH candidate and the fourth PDCCH candidate are used to carry same DCI, and the fourth PDCCH candidate is associated with a third control resource set; or

the first PDCCH candidate is associated with a third PDCCH candidate, and the second PDCCH candidate is associated with a fourth PDCCH candidate, wherein the first PDCCH candidate and the third PDCCH candidate are used to carry same DCI, the third PDCCH candidate is associated with a fourth control resource set, the second PDCCH candidate and the fourth PDCCH candidate are used to carry same DCI, and the fourth PDCCH candidate is associated with the fourth control resource set or a fifth control resource set.

**14.** The method according to any one of claims 11 to 13, wherein

the reference PDCCH candidate comprises one or more of a first reference PDCCH candidate, a second reference PDCCH candidate, a third reference PDCCH candidate, and a fourth reference PDCCH candidate; and the first reference PDCCH candidate is a PDCCH candidate with a latest end OFDM symbol among the first PDCCH candidate, the second PDCCH candidate, and the another PDCCH candidate;

the second reference PDCCH candidate is a PDCCH candidate with an earliest start OFDM symbol among the first PDCCH candidate, the second PDCCH candidate, and the another PDCCH candidate;

the third reference PDCCH candidate is a PDCCH candidate corresponding to a search space set with a smallest index among search space sets respectively corresponding to the first PDCCH candidate, the second PDCCH candidate, and the another PDCCH candidate; or

the fourth reference PDCCH candidate is a PDCCH candidate corresponding to a control resource set with a smallest index among control resource sets respectively corresponding to the first PDCCH candidate, the second PDCCH candidate, and the another PDCCH candidate.

**15.** The method according to claim 14, wherein

the time-frequency-space domain transmission resource information that is indicated by the DCI and that is determined by the network device based on the second reference PDCCH candidate comprises at least one of a position that is of a preempted OFDM symbol and that is indicated by the DCI, whether a CI in the DCI takes effect, and a latest SRS resource position corresponding to an SRI in the DCI; and

the uplink feedback information that corresponds to the DCI and that is determined by the network device based on the second reference PDCCH candidate comprises at least one of a position of a HARQ-ACK feedback bit corresponding to the DCI in a HARQ-ACK codebook, and a PUCCH resource carrying a HARQ-ACK feedback corresponding to the DCI.

**16.** The method according to claim 14, wherein

the time-frequency-space domain transmission resource information that is indicated by the DCI and that is determined by the network device based on the first reference PDCCH candidate comprises at least one of a transmission delay of scheduling by using the DCI, a position that is of an OFDM symbol whose sending is canceled and that is indicated by the DCI, cancellation time that is of an SPS-based PDSCH and that is indicated by the DCI, reception preparation time corresponding to a PDSCH or an aperiodic CSI-RS scheduled by using the DCI in cross-carrier scheduling, a start position of the PDSCH or the aperiodic CSI-RS scheduled by using the DCI, whether a preset receive beam is used in the PDSCH or the aperiodic CSI-RS scheduled by using the DCI, whether the PDSCH or a PUSCH scheduled by using the DCI satisfies a processing capability of a terminal device, and preparation time of the PUSCH or an SRS scheduled by using the DCI;

the uplink transmit power information that is indicated by the DCI and that is determined by the network device based on the first reference PDCCH candidate comprises: whether the DCI is located in an effective time window of TPC; and

the uplink feedback information that corresponds to the DCI and that is determined by the network device based on the first reference PDCCH candidate comprises at least one of in a case that CSI carried in the DCI is triggered, a position relationship between a last OFDM symbol of a PDCCH monitoring time period corresponding to the DCI and a last OFDM symbol of a PDCCH monitoring time period corresponding to a BWP switching indication, a time domain position of a HARQ-ACK feedback corresponding to the DCI, whether a PHR corresponding to the DCI is a virtual PHR or a real PHR, occupation time of a CPU corresponding to aperiodic CSI triggered by the DCI, and calculation time of CSI scheduled by using the DCI.

**17.** The method according to claim 14, further comprising:
the time-frequency-space domain transmission resource information that is indicated by the DCI and that is determined by the network device based on the third reference PDCCH candidate comprises a PUCCH resource indicated by the DCI.

18. The method according to claim 14, further comprising:
the time-frequency-space domain transmission resource information that is indicated by the DCI and that is determined by the network device based on the fourth reference PDCCH candidate comprises a preset QCL assumption of a PDSCH scheduled by using the DCI.

19. The method according to any one of claims 11 to 18, further comprising:
determining, by the network device based on the first PDCCH candidate, the second PDCCH candidate, and the another PDCCH candidate, an RE unavailable for PDSCH transmission.

20. The method according to claim 19, wherein the RE unavailable for the PDSCH transmission comprises an RE occupied by the first PDCCH candidate, an RE occupied by the second PDCCH candidate, and an RE occupied by the another PDCCH candidate.

21. A communication apparatus, wherein the apparatus is a terminal device or an apparatus having a function of a terminal device, and the apparatus comprises a transceiver unit and a processing unit; and
the processing unit invokes the transceiver unit to:

detect DCI on at least one of a first PDCCH candidate and a second PDCCH candidate, wherein
the first PDCCH candidate corresponds to a first aggregation level, the first PDCCH candidate comprises a plurality of CCEs, the second PDCCH candidate corresponds to a second aggregation level, the second PDCCH candidate comprises a plurality of CCEs, a start index of the CCE comprised in the first PDCCH candidate is the same as a start index of the CCE comprised in the second PDCCH candidate, the first PDCCH candidate and the second PDCCH candidate are associated with a first control resource set, the first control resource set occupies one OFDM symbol in time domain, mapping of the plurality of CCEs comprised in the first PDCCH candidate is non-interleaved mapping, and mapping of the plurality of CCEs comprised in the second PDCCH candidate is non-interleaved mapping; and
when the at least one of the first PDCCH candidate and the second PDCCH candidate is associated with another PDCCH candidate, determine a reference PDCCH candidate based on the first PDCCH candidate, the second PDCCH candidate, and the another PDCCH candidate, wherein
the reference PDCCH candidate is used to determine at least one of time-frequency-space domain transmission resource information indicated by the DCI, uplink transmit power information indicated by the DCI, or uplink feedback information corresponding to the DCI.

22. The apparatus according to claim 21, wherein the first aggregation level is 8, and the second aggregation level is 16; or the first aggregation level is 16, and the second aggregation level is 8.

23. The apparatus according to claim 21 or 22, wherein that the at least one of the first PDCCH candidate and the second PDCCH candidate is associated with another PDCCH candidate comprises:

the first PDCCH candidate is associated with a third PDCCH candidate, and there is no PDCCH candidate associated with the second PDCCH candidate, wherein the first PDCCH candidate and the third PDCCH candidate are used to carry same DCI, and the third PDCCH candidate is associated with a second control resource set;
the second PDCCH candidate is associated with a fourth PDCCH candidate, and there is no PDCCH candidate associated with the first PDCCH candidate, wherein the second PDCCH candidate and the fourth PDCCH candidate are used to carry same DCI, and the fourth PDCCH candidate is associated with a third control resource set; or
the first PDCCH candidate is associated with a third PDCCH candidate, and the second PDCCH candidate is associated with a fourth PDCCH candidate, wherein the first PDCCH candidate and the third PDCCH candidate are used to carry same DCI, the third PDCCH candidate is associated with a fourth control resource set, the second PDCCH candidate and the fourth PDCCH candidate are used to carry same DCI, and the fourth PDCCH candidate is associated with the fourth control resource set or a fifth control resource set.

24. The apparatus according to any one of claims 21 to 23, wherein

the reference PDCCH candidate comprises one or more of a first reference PDCCH candidate, a second reference PDCCH candidate, a third reference PDCCH candidate, and a fourth reference PDCCH candidate; and the first reference PDCCH candidate is a PDCCH candidate with a latest end OFDM symbol among the first PDCCH candidate, the second PDCCH candidate, and the another PDCCH candidate;

the second reference PDCCH candidate is a PDCCH candidate with an earliest start OFDM symbol among the first PDCCH candidate, the second PDCCH candidate, and the another PDCCH candidate;

the third reference PDCCH candidate is a PDCCH candidate corresponding to a search space set with a smallest index among search space sets respectively corresponding to the first PDCCH candidate, the second PDCCH candidate, and the another PDCCH candidate; or

the fourth reference PDCCH candidate is a PDCCH candidate corresponding to a control resource set with a smallest index among control resource sets respectively corresponding to the first PDCCH candidate, the second PDCCH candidate, and the another PDCCH candidate.

25. The apparatus according to claim 24, wherein the processing unit is configured to:

the time-frequency-space domain transmission resource information that is indicated by the DCI and that is determined based on the second reference PDCCH candidate comprises at least one of a position that is of a preempted OFDM symbol and that is indicated by the DCI, whether a CI in the DCI takes effect, and a latest SRS resource position corresponding to an SRI in the DCI; and

the uplink feedback information that corresponds to the DCI and that is determined based on the second reference PDCCH candidate comprises at least one of a position of a HARQ-ACK feedback bit corresponding to the DCI in a HARQ-ACK codebook, and a PUCCH resource carrying a HARQ-ACK feedback corresponding to the DCI.

26. The apparatus according to claim 24, wherein the time-frequency-space domain transmission resource information that is indicated by the DCI and that is determined based on the first reference PDCCH candidate comprises at least one of a transmission delay of scheduling by using the DCI, a position that is of an OFDM symbol whose sending is canceled and that is indicated by the DCI, cancellation time that is of an SPS-based PDSCH and that is indicated by the DCI, reception preparation time corresponding to a PDSCH or an aperiodic CSI-RS scheduled by using the DCI in cross-carrier scheduling, a start position of the PDSCH or the aperiodic CSI-RS scheduled by using the DCI, whether a preset receive beam is used in the PDSCH or the aperiodic CSI-RS scheduled by using the DCI, whether the PDSCH or a PUSCH scheduled by using the DCI satisfies a processing capability of the terminal device, and preparation time of the PUSCH or an SRS scheduled by using the DCI;

the uplink transmit power information that is indicated by the DCI and that is determined based on the first reference PDCCH candidate comprises: whether the DCI is located in an effective time window of TPC; and the uplink feedback information that corresponds to the DCI and that is determined based on the first reference PDCCH candidate comprises at least one of in a case that CSI carried in the DCI is triggered, a position relationship between a last OFDM symbol of a PDCCH monitoring time period corresponding to the DCI and a last OFDM symbol of a PDCCH monitoring time period corresponding to a BWP switching indication, a time domain position of a HARQ-ACK feedback corresponding to the DCI, whether a PHR corresponding to the DCI is a virtual PHR or a real PHR, occupation time of a CPU corresponding to aperiodic CSI triggered by the DCI, and calculation time of CSI scheduled by using the DCI.

27. The apparatus according to claim 24, wherein the time-frequency-space domain transmission resource information that is indicated by the DCI and that is determined based on the third reference PDCCH candidate comprises a PUCCH resource indicated by the DCI.

28. The apparatus according to claim 24, wherein the time-frequency-space domain transmission resource information that is indicated by the DCI and that is determined based on the fourth reference PDCCH candidate comprises a preset QCL assumption of a PDSCH scheduled by using the DCI.

29. The apparatus according to any one of claims 21 to 28, wherein the processing unit is configured to: determine, based on the first PDCCH candidate, the second PDCCH candidate, and the another PDCCH candidate, an RE unavailable for PDSCH transmission.

30. The apparatus according to claim 29, wherein the RE unavailable for the PDSCH transmission comprises an RE occupied by the first PDCCH candidate, an RE occupied by the second PDCCH candidate, and an RE occupied by the another PDCCH candidate.

31. A communication apparatus, wherein the apparatus is a network device or an apparatus having a function of a network device, and the apparatus comprises a transceiver unit and a processing unit;

the transceiver unit is configured to send DCI on either a first PDCCH candidate or a second PDCCH candidate, wherein the first PDCCH candidate corresponds to a first aggregation level, the first PDCCH candidate comprises a plurality of CCEs, the second PDCCH candidate corresponds to a second aggregation level, the second PDCCH candidate comprises a plurality of CCEs, a start index of the CCE comprised in the first PDCCH candidate is the same as a start index of the CCE comprised in the second PDCCH candidate, the first PDCCH candidate and the second PDCCH candidate are associated with a first control resource set, the first control resource set occupies one OFDM symbol in time domain, mapping of the plurality of CCEs comprised in the first PDCCH candidate is non-interleaved mapping, and mapping of the plurality of CCEs comprised in the second PDCCH candidate is non-interleaved mapping; and
the processing unit is configured to: when at least one of the first PDCCH candidate and the second PDCCH candidate is associated with another PDCCH candidate, determine a reference PDCCH candidate based on the first PDCCH candidate, the second PDCCH candidate, and the another PDCCH candidate, wherein the reference PDCCH candidate is used to determine at least one of time-frequency-space domain transmission resource information indicated by the DCI, uplink transmit power information indicated by the DCI, or uplink feedback information corresponding to the DCI.

32. The apparatus according to claim 31, wherein the first aggregation level is 8, and the second aggregation level is 16; or the first aggregation level is 16, and the second aggregation level is 8.

33. The apparatus according to claim 31 or 32, wherein that at least one of the first PDCCH candidate and the second PDCCH candidate is associated with another PDCCH candidate comprises:

the first PDCCH candidate is associated with a third PDCCH candidate, and there is no PDCCH candidate associated with the second PDCCH candidate, wherein the first PDCCH candidate and the third PDCCH candidate are used to carry same DCI, and the third PDCCH candidate is associated with a second control resource set;
the second PDCCH candidate is associated with a fourth PDCCH candidate, and there is no PDCCH candidate associated with the first PDCCH candidate, wherein the second PDCCH candidate and the fourth PDCCH candidate are used to carry same DCI, and the fourth PDCCH candidate is associated with a third control resource set; or
the first PDCCH candidate is associated with a third PDCCH candidate, and the second PDCCH candidate is associated with a fourth PDCCH candidate, wherein the first PDCCH candidate and the third PDCCH candidate are used to carry same DCI, the third PDCCH candidate is associated with a fourth control resource set, the second PDCCH candidate and the fourth PDCCH candidate are used to carry same DCI, and the fourth PDCCH candidate is associated with the fourth control resource set or a fifth control resource set.

34. The apparatus according to any one of claims 31 to 33, wherein

the reference PDCCH candidate comprises one or more of a first reference PDCCH candidate, a second reference PDCCH candidate, a third reference PDCCH candidate, and a fourth reference PDCCH candidate; and
the first reference PDCCH candidate is a PDCCH candidate with a latest end OFDM symbol among the first PDCCH candidate, the second PDCCH candidate, and the another PDCCH candidate;
the second reference PDCCH candidate is a PDCCH candidate with an earliest start OFDM symbol among the first PDCCH candidate, the second PDCCH candidate, and the another PDCCH candidate;
the third reference PDCCH candidate is a PDCCH candidate corresponding to a search space set with a smallest index among search space sets respectively corresponding to the first PDCCH candidate, the second PDCCH candidate, and the another PDCCH candidate; or
the fourth reference PDCCH candidate is a PDCCH candidate corresponding to a control resource set with a smallest index among control resource sets respectively corresponding to the first PDCCH candidate, the second PDCCH candidate, and the another PDCCH candidate.

35. The apparatus according to claim 34, wherein the time-frequency-space domain transmission resource information that is indicated by the DCI and that is determined based on the second reference PDCCH candidate comprises at least one of a position that is of a preempted OFDM symbol and that is indicated by the DCI, whether a CI in the DCI takes effect, and a latest SRS resource position corresponding to an SRI in the DCI; and

the uplink feedback information that corresponds to the DCI and that is determined based on the second reference PDCCH candidate comprises at least one of a position of a HARQ-ACK feedback bit corresponding to the DCI in a HARQ-ACK codebook, and a PUCCH resource carrying a HARQ-ACK feedback corresponding to the DCI.

36. The apparatus according to claim 34, wherein the time-frequency-space domain transmission resource information that is indicated by the DCI and that is determined based on the first reference PDCCH candidate comprises at least one of a transmission delay of scheduling by using the DCI, a position that is of an OFDM symbol whose sending is canceled and that is indicated by the DCI, cancellation time that is of an SPS-based PDSCH and that is indicated by the DCI, reception preparation time corresponding to a PDSCH or an aperiodic CSI-RS scheduled by using the DCI in cross-carrier scheduling, a start position of the PDSCH or the aperiodic CSI-RS scheduled by using the DCI, whether a preset receive beam is used in the PDSCH or the aperiodic CSI-RS scheduled by using the DCI, whether the PDSCH or a PUSCH scheduled by using the DCI satisfies a processing capability of a terminal device, and preparation time of the PUSCH or an SRS scheduled by using the DCI;

the uplink transmit power information that is indicated by the DCI and that is determined based on the first reference PDCCH candidate comprises: whether the DCI is located in an effective time window of TPC; and the uplink feedback information that corresponds to the DCI and that is determined based on the first reference PDCCH candidate comprises at least one of in a case that CSI carried in the DCI is triggered, a position relationship between a last OFDM symbol of a PDCCH monitoring time period corresponding to the DCI and a last OFDM symbol of a PDCCH monitoring time period corresponding to a BWP switching indication, a time domain position of a HARQ-ACK feedback corresponding to the DCI, whether a PHR corresponding to the DCI is a virtual PHR or a real PHR, occupation time of a CPU corresponding to aperiodic CSI triggered by the DCI, and calculation time of CSI scheduled by using the DCI.

37. The apparatus according to claim 34, wherein the time-frequency-space domain transmission resource information that is indicated by the DCI and that is determined based on the third reference PDCCH candidate comprises a PUCCH resource indicated by the DCI.

38. The apparatus according to claim 34, wherein the time-frequency-space domain transmission resource information that is indicated by the DCI and that is determined based on the fourth reference PDCCH candidate comprises a preset QCL assumption of a PDSCH scheduled by using the DCI.

39. The apparatus according to any one of claims 31 to 38, wherein the processing unit is configured to determine, based on the first PDCCH candidate, the second PDCCH candidate, and the another PDCCH candidate, an RE unavailable for PDSCH transmission.

40. The apparatus according to claim 39, wherein the RE unavailable for the PDSCH transmission comprises an RE occupied by the first PDCCH candidate, an RE occupied by the second PDCCH candidate, and an RE occupied by the another PDCCH candidate.

41. A communication apparatus, comprising a processor, wherein the processor is configured to execute instructions stored in a memory, to enable the method according to any one of claims 1 to 20 to be implemented.

42. A computer-readable storage medium, wherein the storage medium stores a computer program or instructions; and when the computer program or the instructions are executed by a communication apparatus, the method according to any one of claims 1 to 20 is implemented.

43. A computer program product, wherein the computer program product comprises a computer program; and when the computer program runs on a communication apparatus, the method according to any one of claims 1 to 20 is implemented.

Core network
device 110

Access network
device 120

Terminal
device 130

Terminal
device 140

FIG. 1

CORESET 1 (12 RBs)

| RB 0 | RB 1 | RB 2 | RB 3 | RB 4 | RB 5 | RB 6 | RB 7 | RB 8 | RB 9 | RB 10 | RB 11 | RB 12 | RB 13 | RB 14 | RB 15 | RB 16 | RB 17 |

BWP 1 (18 RBs)

FIG. 2

CORESET
occupying one
symbol in
time domain

REG bundle including six REGs

REG bundle
including two REGs

CORESET
occupying
two symbols
in time
domain

REG bundle including six REGs

REG bundle
including two REGs

CORESET
occupying
three symbols
in time
domain

REG bundle including six REGs

REG bundle including
three REGs

FIG. 3

CORESET: 48 REG

| CCE 0 | AL=2<br>PDCCH candidate 0<br>(PDCCH candidate 0) | AL=4<br>PDCCH candidate 0<br>(PDCCH candidate 0) | AL=8<br>PDCCH candidate 0<br>(PDCCH candidate 0) |
|---|---|---|---|
| CCE 1 | | | |
| CCE 2 | AL=2<br>PDCCH candidate 1<br>(PDCCH candidate 1) | | |
| CCE 3 | | | |
| CCE 4 | AL=2<br>PDCCH candidate 2<br>(PDCCH candidate 2) | AL=4<br>PDCCH candidate 0<br>(PDCCH candidate 0) | |
| CCE 5 | | | |
| CCE 6 | AL=2<br>PDCCH candidate 3<br>(PDCCH candidate 3) | | |
| CCE 7 | | | |

FIG. 4

Frequency domain

CORESET including one
OFDM symbol in time domain

Time
domain

| CCE 0 | | | | | | CCE 1 | | | | | | CCE 2 | | | | | | CCE 3 | | | | | |
|---|---|---|---|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |

REG bundle #0
(REG bundle #0)

REG bundle #1
(REG bundle #1)

REG bundle #2
(REG bundle #2)

REG bundle #3
(REG bundle #3)

FIG. 5

FIG. 6

FIG. 7

FIG. 8

MO 1

MO 1

MO 2

MO 2

MO 1

MO 1

MO 2

MO 2

FIG. 9

SSS 1: PDCCH
candidate
corresponding
to AL8

SSS 2: PDCCH
candidate
corresponding
to AL16

FIG. 10A

SSS 1: PDCCH
candidate
corresponding
to AL8

SSS 2: PDCCH
candidate
corresponding
to AL16

SSS 3: PDCCH
candidate
corresponding
to AL8

FIG. 10B

SSS 1: PDCCH
candidate
corresponding
to AL8

SSS 2: PDCCH
candidate
corresponding
to AL16

SSS 4: PDCCH
candidate
corresponding
to AL16

FIG. 10C

SSS 1: PDCCH
candidate
corresponding
to AL8

SSS 2: PDCCH
candidate
corresponding
to AL16

SSS 5: PDCCH
candidate
corresponding
to AL16

SSS 3: PDCCH
candidate
corresponding
to AL8

FIG. 10D

SSS 1: PDCCH
candidate
corresponding
to AL8

SSS 2: PDCCH
candidate
corresponding
to AL16

SSS 4: PDCCH
candidate
corresponding
to AL16

SSS 6: PDCCH
candidate
corresponding
to AL8

FIG. 10E

SSS 1: PDCCH candidate corresponding to AL8

SSS 2: PDCCH candidate corresponding to AL16

SSS 4: PDCCH candidate corresponding to AL16

SSS 3: PDCCH candidate corresponding to AL8

FIG. 11A

SSS 1: PDCCH
candidate
corresponding
to AL8

SSS 2: PDCCH
candidate
corresponding
to AL16

SSS 4: PDCCH
candidate
corresponding
to AL16

SSS 3: PDCCH
candidate
corresponding
to AL8

FIG. 11B

FIG. 12

| Terminal device | | Network device |
|---|---|---|

Step 1300: The network device sends DCI on either a
first PDCCH candidate or a second PDCCH candidate

| Step 1310: When the first PDCCH candidate is associated with a third PDCCH candidate, and there is no PDCCH candidate associated with the second PDCCH candidate, the terminal device determines a reference PDCCH candidate based on the first PDCCH candidate and the third PDCCH candidate | | Step 1310: When the first PDCCH candidate is associated with a third PDCCH candidate, and there is no PDCCH candidate associated with the second PDCCH candidate, the network device determines a reference PDCCH candidate based on the first PDCCH candidate and the third PDCCH candidate |
|---|---|---|

FIG. 13

| Terminal device | | Network device |
|---|---|---|

Step 1400: The network device sends DCI on either a
first PDCCH candidate or a second PDCCH candidate

| Step 1410: When at least one of the first PDCCH candidate and the second PDCCH candidate is associated with another PDCCH candidate, the terminal device determines a reference PDCCH candidate based on the first PDCCH candidate, the second PDCCH candidate, and the another PDCCH candidate | | Step 1410: When at least one of the first PDCCH candidate and the second PDCCH candidate is associated with another PDCCH candidate, the network device determines a reference PDCCH candidate based on the first PDCCH candidate, the second PDCCH candidate, and the another PDCCH candidate |
|---|---|---|

FIG. 14

Communication apparatus
1500

Processing unit 1510

Transceiver unit 1520

FIG. 15

Communication apparatus 1600

Processor 1610

Interface circuit 1620

Memory 1630

FIG. 16

## INTERNATIONAL SEARCH REPORT

| | |
|---|---|
| | International application No. |
| | **PCT/CN2022/128389** |

**A. CLASSIFICATION OF SUBJECT MATTER**

H04B 17/309(2015.01)i

According to International Patent Classification (IPC) or to both national classification and IPC

**B. FIELDS SEARCHED**

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNTXT; CNABS; CNKI; VEN; 3GPP: 下行控制信道, 聚合, 候选, 关联, 正交频分复用, 交叠, 交织, 指示, PDCCH, aggregation, candidate, corresponding, related, OFDM, overlap, interleaved, indication

**C. DOCUMENTS CONSIDERED TO BE RELEVANT**

| Category* | Citation of document, with indication, where appropriate, of the relevant passages | Relevant to claim No. |
|---|---|---|
| A | CN 111614415 A (VIVO COMMUNICATION TECHNOLOGY CO., LTD.) 01 September 2020 (2020-09-01)<br>entire document | 1-43 |
| A | CN 103563320 A (HUAWEI TECHNOLOGIES CO., LTD.) 05 February 2014 (2014-02-05)<br>entire document | 1-43 |
| A | CN 103190113 A (PANASONIC CORP.) 03 July 2013 (2013-07-03)<br>entire document | 1-43 |
| A | 3GPP. ""R1-1813123CR1-38213 Correction to application of powerControlOffsetSS for PDCCH order""<br>*tsg_ran\wg1_rl1*, 03 November 2018 (2018-11-03),<br>entire document | 1-43 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 January 2023** | **18 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
Information on patent family members

</div>

| | International application No. |
|---|---|
| | **PCT/CN2022/128389** |

| Patent document cited in search report | | | Publication date (day/month/year) | Patent family member(s) | | | Publication date (day/month/year) |
|---|---|---|---|---|---|---|---|
| CN | 111614415 | A | 01 September 2020 | None | | | |
| CN | 103563320 | A | 05 February 2014 | EP | 2816769 | A1 | 24 December 2014 |
| | | | | US | 2015003401 | A1 | 01 January 2015 |
| | | | | WO | 2013138981 | A1 | 26 September 2013 |
| | | | | ZA | 201406970 | B | 23 December 2015 |
| | | | | AU | 2012373944 | A1 | 30 October 2014 |
| CN | 103190113 | A | 03 July 2013 | US | 2018183559 | A1 | 28 June 2018 |
| | | | | WO | 2012041467 | A1 | 05 April 2012 |
| | | | | EP | 2622777 | A1 | 07 August 2013 |
| | | | | US | 2019268121 | A1 | 29 August 2019 |
| | | | | US | 2020287689 | A1 | 10 September 2020 |
| | | | | DK | 2824865 | T3 | 12 March 2018 |
| | | | | PL | 2824865 | T3 | 29 June 2018 |
| | | | | TR | 201802592 | T4 | 21 March 2018 |
| | | | | JP | 2013546217 | A | 26 December 2013 |
| | | | | NO | 2824865 | T3 | 19 May 2018 |
| | | | | EP | 2824865 | A1 | 14 January 2015 |
| | | | | US | 2016020883 | A1 | 21 January 2016 |
| | | | | ES | 2659963 | T3 | 20 March 2018 |
| | | | | SI | 2824865 | T1 | 30 March 2018 |
| | | | | HU | E038235 | T2 | 29 October 2018 |
| | | | | EP | 2437422 | A1 | 04 April 2012 |
| | | | | US | 2013250906 | A1 | 26 September 2013 |
| | | | | PT | 2824865 | T | 20 March 2018 |
| | | | | LT | 2824865 | T | 12 February 2018 |
| | | | | CN | 106850171 | A | 13 June 2017 |
| | | | | RS | 56999 | B1 | 31 May 2018 |
| | | | | EP | 3291475 | A1 | 07 March 2018 |
| | | | | HR | P20180431 | T1 | 20 April 2018 |
| | | | | JP | 2015180066 | A | 08 October 2015 |
| | | | | CY | 1119996 | T1 | 12 December 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111308899